(19) Europäisches Patentamt
European Patent Office
Office européen des brevets

(11) **EP 4 495 764 A1**

(12) **EUROPEAN PATENT APPLICATION**
published in accordance with Art. 153(4) EPC

(43) Date of publication:
**22.01.2025 Bulletin 2025/04**

(21) Application number: **23791051.8**

(22) Date of filing: **07.04.2023**

(51) International Patent Classification (IPC):
*G06F 9/451* (2018.01)

(52) Cooperative Patent Classification (CPC):
**G06F 9/451**

(86) International application number:
**PCT/CN2023/087036**

(87) International publication number:
**WO 2023/202395 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022 CN 202210423664**

(71) Applicant: **Huawei Technologies Co., Ltd.
Shenzhen, Guangdong 518129 (CN)**

(72) Inventors:
• **SU, Hongkai**
  **Shenzhen, Guangdong 518129 (CN)**
• **NIU, Dun**
  **Shenzhen, Guangdong 518129 (CN)**

(74) Representative: **Huawei European IPR
Huawei Technologies Duesseldorf GmbH
Riesstraße 25
80992 München (DE)**

(54) **INTERFACE LAYOUT METHOD AND APPARATUS**

(57) Embodiments of this application provide an interface layout method and apparatus. The method is applied to a layout module of a terminal device, the terminal device further includes a first application, and the method includes: receiving an interface refresh instruction; and in response to the interface refresh instruction, adjusting, based on a type of a to-be-adjusted view on an application interface of the first application and a target size, an initial layout of the to-be-adjusted view when it is determined that layout adjustment is to be performed, to obtain a target layout of the to-be-adjusted view, where the target size is a size of a target display area, the target display area is used to display an adjusted layout of the application interface of the first application, and the adjusted layout includes the target layout of the to-be-adjusted view. According to embodiments of this application, application development costs can be reduced.

800

Receive an interface refresh instruction — 801

↓

In response to the interface refresh instruction, adjust, based on a type of a to-be-adjusted view on an application interface of a first application and a target size, an initial layout of the to-be-adjusted view when it is determined that layout adjustment needs to be performed, to obtain a target layout of the to-be-adjusted view — 802

FIG. 8

## Description

This application claims priority to Chinese Patent Application No. 202210423664.3, filed with the China National Intellectual Property Administration on April 21, 2022 and entitled "INTERFACE LAYOUT METHOD AND APPARATUS", which is incorporated herein by reference in its entirety.

## TECHNICAL FIELD

Embodiments of this application relate to the terminal field, and in particular, to an interface layout method and apparatus.

## BACKGROUND

With development of terminal technologies, terminal devices of various forms and sizes emerge one after another. Correspondingly, there are great differences in use of a same application (application, APP) on a plurality of terminal devices, such as differences in interface layouts of the same application on the plurality of terminal devices (for example, a mobile phone, a tablet, and a foldable mobile phone).

In a related technology, an application may adjust its interface layout to adapt to a terminal device screen based on interaction between a terminal system and the application.

In this method, however, the application needs to adaptively adjust a layout of a view on an application interface in cooperation with display window sizes of various terminal devices. This increases application development costs.

## SUMMARY

Embodiments of this application provide an interface layout method and apparatus, to reduce application development costs.

According to a first aspect, an embodiment of this application provides an interface layout method, applied to a layout module of a terminal device, the terminal device further includes a first application, and the method includes: receiving an interface refresh instruction; in response to the interface refresh instruction, adjusting, based on a type of a to-be-adjusted view on an application interface of the first application and a target size, an initial layout of the to-be-adjusted view when it is determined that layout adjustment is to be performed, to obtain a target layout of the to-be-adjusted view, where the target size is a size of a target display area; and displaying, in the target display area, an adjusted layout of the application interface of the first application, where the adjusted layout includes the target layout of the to-be-adjusted view.

In embodiments of this application, the layout module adjusts the layout of the to-be-adjusted view on the application interface of the first application, to adapt to the size of the target display area, so that application development costs can be reduced, and more diversified application interfaces can be applied to. In addition, different adjustment manners are used based on a type of a view during adjustment, so that more view content can be arranged in the target layout.

In embodiments of this application, the layout apparatus may receive the interface refresh instruction from the first application.

In the first application, an operation of opening the first application may trigger the interface refresh instruction, or an operation that causes a width change of the target display area may trigger the interface refresh instruction. The operation that causes the width change of the target display area may include changing a direction of the terminal device (for example, changing from a portrait mode to a landscape mode, or from a landscape mode to a portrait mode), and may further include changing a state of a foldable mobile phone (for example, completely unfolding the foldable mobile phone from a folded state, or folding the foldable mobile phone from an unfolded state).

In a possible implementation, in response to the interface refresh instruction, the layout module may first obtain an initial size and the target size, where the initial size corresponds to the initial layout, and the target size corresponds to the target layout; and when the initial size is the same as the target size, determine not to perform the layout adjustment; or when the initial size is different from the target size, determine that the layout adjustment is to be performed.

The initial size may be a size that is of a display area and that is assumed by an application developer based on a size of a most commonly used mobile phone when the first application is developed. For example, it may be assumed, based on a width of the commonly used mobile phone, that the size (initial size) of the display area is four columns, and then the initial layout of the application interface of the first application is designed based on the four columns. The initial layout is an initial layout that is set by the application developer when the first application is developed. Generally, the application developer may design the layout of the application interface based on an aspect ratio of a commonly used terminal. For example, a screen size of the mobile phone is four columns. Therefore, a size of a root view group in the initial layout of the first application interface may be four columns, and a sub-view group and/or a view are/is arranged in the root view group. It should be understood that, the mobile phone is a most commonly used terminal device. To facilitate adaptation to more terminal devices, the application developer may usually use the screen size of the mobile phone as the size of the root view group in the initial layout. However, this is not limited. The size of the root view group in the initial layout may alternatively be based on a screen size of another terminal device, or may be a commonly used screen size of most terminal devices. This is not specifically limited in embodiments of this application.

The target size is the size of the target display area, and the target display area is an actual display area of the application interface of the first application. When the application interface of the first application is displayed in a full-screen manner, the target display area may be an entire screen of the terminal device. When the application interface of the first application is displayed in a split-screen manner, the target display area may be a part of the screen of the terminal device (for example, an upper half screen of the terminal device). When the application interface of the first application is displayed by using a pop-up window or a card, the target display area may be an area in which the window or the card is displayed on the terminal device. In addition, there may be another scenario for the target display area. This is not specifically limited in embodiments of this application. For example, in a scenario in which the first application is displayed in the full-screen manner, a size of a target display area (target size) of the mobile phone is 4 columns, a size of a target display area (target size) of the foldable mobile phone is 8 columns, and a size of a target display area (target size) of a tablet is 12 columns.

The layout module may first determine whether the layout adjustment is to be performed. To be specific, when the initial size is the same as the target size, it indicates that, from development to actual application of the first application, the size of the display area remains unchanged. Therefore, the initial layout provided by the first application may be directly used for display on the terminal device, and the layout of the application interface of the first application does not need to be adjusted. When the initial size is different from the target size, it indicates that, from development to actual application of the first application, the size of the display area has changed. Therefore, the layout of the application interface of the first application needs to be adjusted to adapt to the target display area on the terminal device.

In embodiments of this application, the to-be-adjusted view may be a list view, a paged view, or a text view, and a plurality of layouts may be set for the to-be-adjusted view based on the size of the target display area of the terminal device.

In embodiments of this application, when it is determined that the layout adjustment is to be performed, the following two methods may be used to implement the layout adjustment.

In a first method, the layout module may directly adjust the initial layout of the to-be-adjusted view based on the target size to obtain the target layout of the to-be-adjusted view.

In a second method, the layout module may first obtain a preset intermediate size, and adjust the initial layout of the to-be-adjusted view based on the intermediate size to obtain an intermediate layout; and then adjust the intermediate layout based on the target size to obtain the target layout of the to-be-adjusted view. In other words, the layout module may add an intermediate adjustment process to a process from the initial layout to the target layout.

The intermediate size is a preset size, and the size of the target display area may be obtained through analysis based on historical experience or big data. When the layout of the application interface is the intermediate size, the application interface is most aesthetic and most meets visual and operation requirements of a user. The foldable mobile phone is used as an example. The screen size of the foldable mobile phone is eight columns, and an intermediate size during full-screen display may be set to six columns.

In embodiments of this application, there are two cases: In one case, if the intermediate size is the same as the initial size or the intermediate size is the same as the target size, the first method may be used; and in the other case, if the intermediate size is different from the initial size and the target size, the second method may be used.

In the second method, the layout module may perform, based on the intermediate size, at least one of stretching, compression, and position adjustment on a plurality of view groups included in the initial layout to obtain the intermediate layout. The adjustment may include stretching/compressing the size of the root view group in the initial layout to the intermediate size, and stretching/compressing (including proportionally stretching/compressing, stretching/compressing in a fixed proportion, and the like) the plurality of view groups in the initial layout within a range of the intermediate size, or adjusting a view position. A view including an image is used as an example. To avoid distortion of the image, a proportion of the view cannot be arbitrarily adjusted. Therefore, the view may be set to an appropriate position by position adjustment (including moving up, down, left, right, or the like), so that the entire layout is more harmonious.

Optionally, in embodiments of this application, adjustment from the initial layout to the intermediate layout may alternatively be implemented by the application. To be specific, the layout module notifies the application of the intermediate size, and the application implements the foregoing process on the initial layout based on the intermediate size, to obtain the intermediate layout. Then, the layout module obtains information about the intermediate layout from the application.

It should be noted that, in addition to the foregoing methods, another method may be further used to adjust the initial layout. A manner of adjusting the initial layout to the intermediate layout is not specifically limited in embodiments of this application.

Both the two methods include adjusting a layout before adjustment based on the target size to obtain the target layout of the to-be-adjusted view. The layout before adjustment refers to the initial layout of the to-be-adjusted view in the first method, and refers to the intermediate layout in the second method.

In embodiments of this application, different adjustment manners may be used for different types of to-be-adjusted views.

1. When the to-be-adjusted view is the list view, a quantity of columns in which a plurality of sub-views included in the list view are arranged in the initial layout is obtained; a target quantity of columns is obtained based on the quantity of columns in which the plurality of sub-views are arranged, the initial size, and the target size; and the plurality of sub-views are arranged based on the target quantity of columns to obtain a target layout of the list view.

2. When the to-be-adjusted view is the paged view, sizes of a plurality of sub-views included in the paged view and an arrangement sequence of the plurality of sub-views in the initial layout are obtained; target padding content is obtained based on the sizes of the plurality of sub-views, the arrangement sequence of the plurality of sub-views, the initial size, and the target size, where the target padding content includes a plurality of padding sub-views and display sizes of the plurality of padding sub-views, and the initial size corresponds to the initial layout; and the plurality of padding sub-views are padded in the target display area based on the display sizes of the plurality of padding sub-views to obtain a target layout of the paged view. Optionally, the layout module may further adjust (including extension or compression), based on the target size, the sizes of the plurality of sub-views included in the paged view. This is not specifically limited.

3. When the to-be-adjusted view is the text view, a width of a word area included in the text view in the initial layout is obtained; a target width is obtained based on the width of the word area, the initial size, and the target size; and the width of the word area is adjusted to the target width to obtain a target layout of the text view.

According to a second aspect, an embodiment of this application provides an interface layout apparatus, used in a terminal device, where the terminal device further includes a first application, and the apparatus includes: a layout module, configured to: receive an interface refresh instruction; and in response to the interface refresh instruction, adjust, based on a type of a to-be-adjusted view on an application interface of the first application and a target size, an initial layout of the to-be-adjusted view when it is determined that layout adjustment is to be performed, to obtain a target layout of the to-be-adjusted view, where the target size is a size of a target display area; and a display module, configured to display, in the target display area, an adjusted layout of the application interface of the first application, where the adjusted layout includes the target layout of the to-be-adjusted view.

In a possible implementation, the layout module is disposed at an application framework layer of an operating system of the terminal device.

In a possible implementation, the layout module is further configured to: obtain an initial size and the target size, where the initial size corresponds to the initial layout; and when the initial size is the same as the target size, determine not to perform the layout adjustment; or when the initial size is different from the target size, determine that the layout adjustment is to be performed.

In a possible implementation, the to-be-adjusted view is a list view, a paged view, or a text view.

In a possible implementation, the layout module is specifically configured to: when the to-be-adjusted view is the list view, obtain a quantity of columns in which a plurality of sub-views included in the list view are arranged in the initial layout; obtain a target quantity of columns based on the quantity of columns in which the plurality of sub-views are arranged, the initial size, and the target size, where the initial size corresponds to the initial layout; and arrange the plurality of sub-views based on the target quantity of columns to obtain a target layout of the list view.

In a possible implementation, the layout module is specifically configured to: when the to-be-adjusted view is the paged view, obtain sizes of a plurality of sub-views included in the paged view and an arrangement sequence of the plurality of sub-views in the initial layout; obtain target padding content based on the sizes of the plurality of sub-views, the arrangement sequence of the plurality of sub-views, the initial size, and the target size, where the target padding content includes a plurality of padding sub-views and display sizes of the plurality of padding sub-views, and the initial size corresponds to the initial layout; and pad, in the target display area, the plurality of padding sub-views based on the display sizes of the plurality of padding sub-views to obtain a target layout of the paged view.

In a possible implementation, the layout module is specifically configured to: when the to-be-adjusted view is the text view, obtain a width of a word area included in the text view in the initial layout; obtain a target width based on the width of the word area, the initial size, and the target size, where the initial size corresponds to the initial layout; and adjust the width of the word area to the target width to obtain a target layout of the text view.

In a possible implementation, when the target size is greater than the initial size, the target quantity of columns is greater than the quantity of columns in which the plurality of sub-views are arranged.

In a possible implementation, when the target size is greater than the initial size, a first quantity of views displayed in the target display area is greater than a second quantity of views, the first quantity of views corresponds to the target layout, and the second quantity of views corresponds to the initial layout.

In a possible implementation, when the target size is greater than the initial size, a first quantity of words displayed in a row in the target display area is greater than a second quantity of words, the first quantity of words corresponds to the target layout, and the second quantity of words corresponds to the initial layout.

In a possible implementation, the layout module is further configured to identify a type of the to-be-adjusted view.

In a possible implementation, the layout module is specifically configured to obtain the target quantity of columns according to the following formula:

$$C2 = C1 \times \frac{W2}{W1}$$

Herein, C2 represents the target quantity of columns, C1 represents the quantity of columns in which the plurality of sub-views are arranged, W1 represents a width of the initial size, and W2 represents a width of the target size.

According to a third aspect, an embodiment of this application provides a terminal device, including one or more processors and a memory. The memory is configured to store one or more programs. When the one or more programs are executed by the one or more processors, the one or more processors are enabled to perform the method according to any one of the first aspect.

According to a fourth aspect, an embodiment of this application provides a computer-readable storage medium, including a computer program. When the computer program is executed on a computer, the computer is enabled to perform the method according to any one of the first aspect.

According to a fifth aspect, an embodiment of this application provides a computer program product. The computer program product includes computer program code, and when the computer program code is run on a computer, the computer is enabled to perform the method according to any one of the first aspect.

## BRIEF DESCRIPTION OF DRAWINGS

FIG. 1 is a diagram of a layout of an application interface on a mobile phone;

FIG. 2 is a diagram of a layout of an application interface on a foldable mobile phone;

FIG. 3 is a diagram of a layout of an application interface on a foldable mobile phone;

FIG. 4 is an example diagram of a structure of a terminal device 400 according to an embodiment of this application;

FIG. 5 is an example block diagram of a software structure of a terminal device 400 according to an embodiment of this application;

FIG. 6a to FIG. 6c are diagrams of screen division of terminal devices;

FIG. 7a to FIG. 7c are diagrams of column representations of a root view group;

FIG. 8 is a flowchart of a process 800 of an interface layout method according to an embodiment of this application;

FIG. 9a is an example diagram of a list view in an initial layout;

FIG. 9b is an example diagram of a paged view in an initial layout;

FIG. 9c is an example diagram of a text view in an initial layout;

FIG. 10a is an example diagram of a list view in a target layout;

FIG. 10b and FIG. 10c are example diagrams of a paged view in a target layout;

FIG. 10d is an example diagram of a text view in a target layout;

FIG. 11a is a flowchart of adjusting a list view;

FIG. 11b is a flowchart of adjusting a paged view;

FIG. 11c is a flowchart of adjusting a text view;

FIG. 12a and FIG. 12b are diagrams of a list view before and after adjustment;

FIG. 13a and FIG. 13b are diagrams of a paged view before and after adjustment;

FIG. 14a and FIG. 14b are diagrams of a text view before and after adjustment; and

FIG. 15 is a block diagram of an apparatus 1500 according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a particular order of the target objects.

In embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner.

In the descriptions of embodiments of this application, unless otherwise stated, "a plurality of" means two or more than two. For example, a plurality of processing units refer to two or more processing units, and a plurality of systems refer to two or more systems.

With development of terminal technologies, terminal devices of various forms and sizes emerge one after another. Correspondingly, there are great differences in use of a same app on a plurality of terminal devices, such as differences in interface layouts of the same app on the plurality of terminal devices (for example, a mobile phone, a tablet, and a foldable mobile phone).

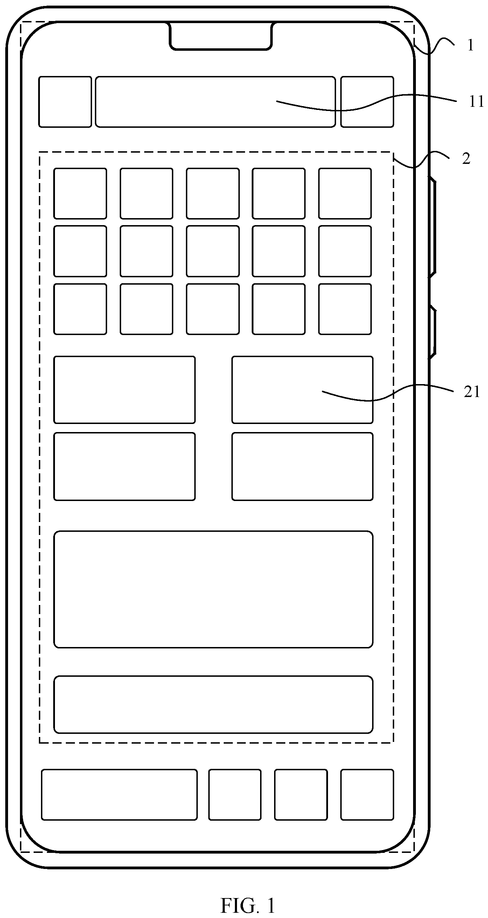

FIG. 1 is a diagram of a layout of an application interface on a mobile phone. After an application on the mobile phone is opened, an interface of the application is displayed, and a layout of the interface is shown in FIG. 1. The layout includes two layers of nested view groups (view groups 1 and 2), where the view group 1 is a root view group of the layout, the view group 2 is a sub-view group of the view group 1, and the view group 1 may be referred to as a parent view group of the view group 1.

In addition to the view group 2, the view group 1 further includes a view located at the top and a view located at the bottom, for example, a view 11. The view group 2 includes a plurality of views, for example, a view 21.

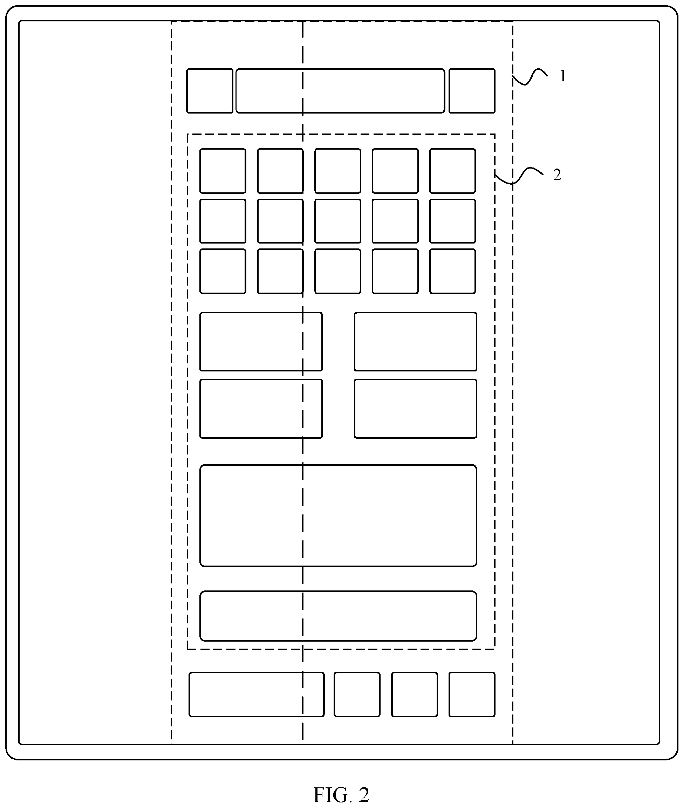

FIG. 2 is a diagram of a layout of an application interface on a foldable mobile phone. As shown in FIG. 2, after the foregoing application is opened on the foldable mobile phone, an interface that is the same as that shown in FIG. 1 is displayed.

Generally, an aspect ratio of the mobile phone is 16:9, and an aspect ratio of the foldable mobile phone is 8:7.1. When an application is designed based on the aspect ratio of the mobile phone, an application adaptive compatibility mode may be used, to adapt to the aspect ratio of the foldable mobile phone. A system of the foldable mobile phone notifies the application of a screen size of the foldable mobile phone, and the application stretches the layout shown in FIG. 1 proportionally based on the screen size. First, a height of the layout is set to be the same as a screen height of the foldable mobile phone. Then, a width of the layout is set based on the ratio of 16:9. Further, sizes and positions of the view groups in the layout are adaptively adjusted. Therefore, as shown in FIG. 2, left and right sides of the foldable mobile phone are partially blank, resulting in an unaesthetic interface layout.

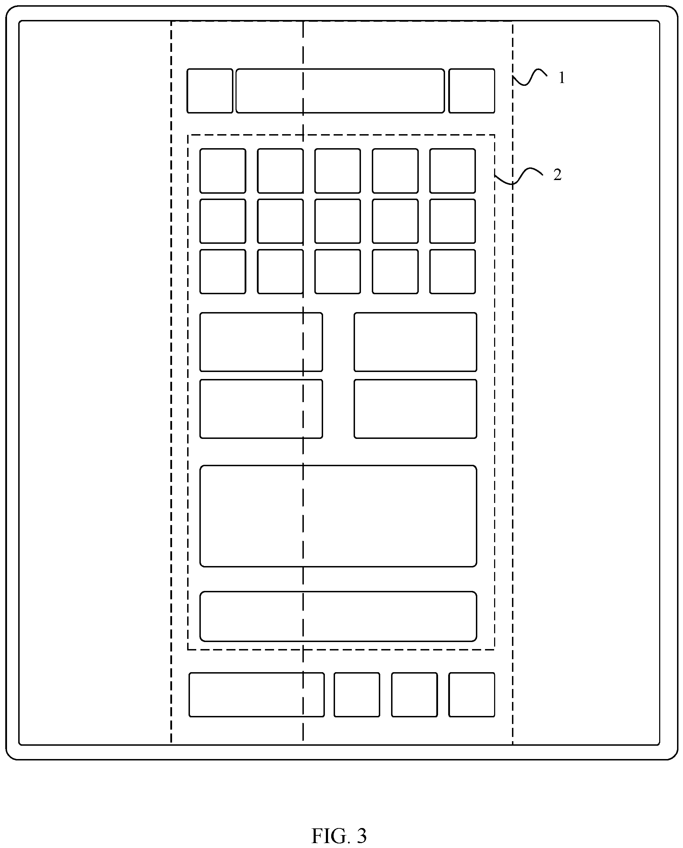

FIG. 3 is a diagram of a layout of an application interface on the foldable mobile phone. As shown in FIG. 3, after the foregoing application is opened on the foldable mobile phone, an interface that is the same as that shown in FIG. 1 is displayed.

Similarly, a system compatibility mode may be used, to adapt to the aspect ratio of the foldable mobile phone: The system of the foldable mobile phone notifies the application of a fixed size (for example, 4:3), and the application scales up the layout shown in FIG. 1 based on the size, and forcibly scales up the layout to be 4:3. Therefore, as shown in FIG. 3, the interface displayed on the foldable mobile phone is truncated, the view at the bottom in FIG. 1 is truncated, and a user needs to manually slide up to display the interface. Consequently, the interface is incompletely displayed.

Further, in the examples shown in FIG. 2 and FIG. 3, the application needs to adjust the layout. This increases application development costs.

To resolve the foregoing technical problems, embodiments of this application provide an interface layout method. The technical solutions of this application are described with reference to the following embodiments.

Before the technical solutions in embodiments of this application are described, an application scenario in embodiments of this application is first described with reference to the accompanying drawings. The method according to embodiments of this application may be applied to a terminal device.

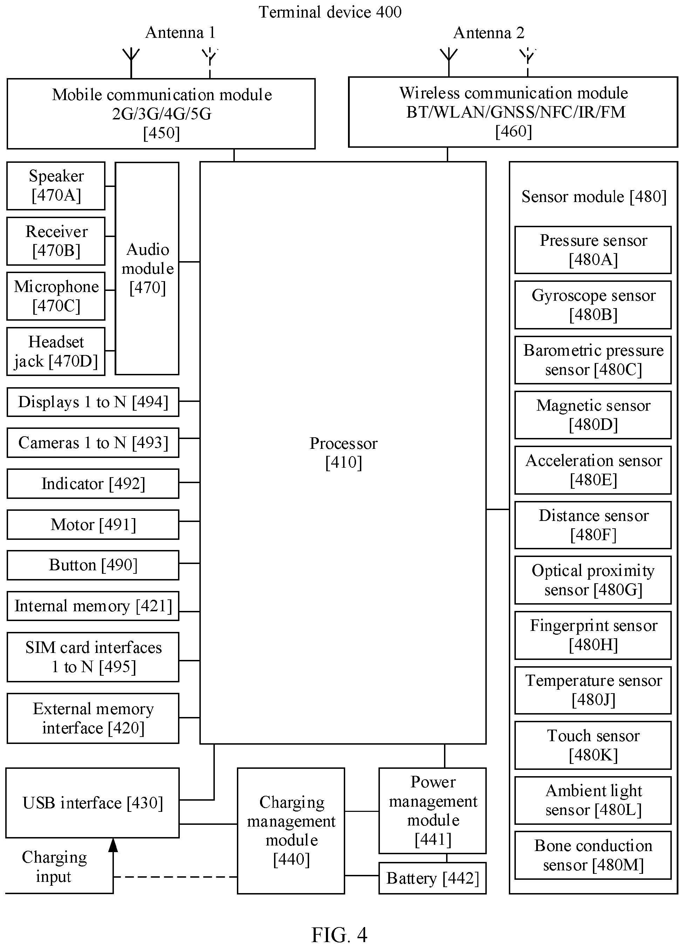

FIG. 4 is an example diagram of a structure of a terminal device 400 according to an embodiment of this application. As shown in FIG. 4, the terminal device 400 may include any one of terminal devices such as a mobile phone, a foldable mobile phone, a tablet computer, and a smart screen.

It should be understood that the terminal device 400 shown in FIG. 4 is merely an example, and the terminal device 400 may have more or fewer components than those shown in the figure, or may combine two or more components, or may have different component configurations. Various components shown in FIG. 4 may be implemented in hardware including one or more signal processing and/or application-specific integrated circuits, software, or a combination of hardware and software.

The terminal device 400 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the terminal device 400. The controller may generate an operation control signal based on an instruction operation code and a time sequence signal, to complete control of instruction fetching and instruction execution.

A memory may be further disposed in the processor 410, and is configured to store instructions and data. In some embodiments, the memory in the processor 410 is a cache. The memory may store instructions or data that is just used or cyclically used by the processor 410. If the processor 410 needs to use the instructions or the data again, the processor may directly invoke the instructions or the data from the memory. This avoids repeated access, reduces waiting time of the processor 410, and improves system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 410 may include a plurality of groups of I2C buses. The processor 410 may be separately coupled to the touch sensor 480K, a charger, a flash, the camera 493, and the like through different I2C bus interfaces. For example, the processor 410 may be coupled to the touch sensor 480K through the I2C interface, so that the processor 410 communicates with the touch sensor 480K through the I2C bus interface, to implement a touch function of the terminal device 400.

The I2S interface may be configured for audio communication. In some embodiments, the processor 410 may include a plurality of groups of I2S buses. The processor 410 may be coupled to the audio module 470 through the I2S bus, to implement communication between the processor 410 and the audio module 470. In some embodiments, the audio module 470 may transmit an audio signal to the wireless communication module 460 through the I2S interface, to implement a function of answering a call through a Bluetooth headset.

The PCM interface may also be configured to perform audio communication, and sample, quantize, and code an analog signal. In some embodiments, the audio module 470 may be coupled to the wireless communication module 460 through a PCM bus interface. In some embodiments, the audio module 470 may alternatively transmit an audio signal to the wireless communication module 460 through the PCM interface, to implement a function of answering a call through a Bluetooth headset. Both the I2S interface and the PCM interface may be configured for audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 410 to the wireless communication module 460. For example, the processor 410 communicates with a Bluetooth module in the wireless communication module 460 through the UART interface, to implement a Bluetooth function. In some embodiments, the audio module 470 may transmit an audio signal to the wireless communication module 460 through the UART interface, to implement a function of playing music through a Bluetooth headset.

The MIPI interface may be configured to connect the processor 410 to a peripheral component such as the display 494 or the camera 493. The MIPI interface includes a camera serial interface (camera serial interface, CSI), a display serial interface (display serial interface, DSI), and the like. In some embodiments, the processor 410 communicates with the camera 493 through the CSI interface, to implement a photographing function of the terminal device 400. The processor 410 communicates with the display 494 through the DSI interface, to implement a display function of the terminal device 400.

The GPIO interface may be configured by software. The GPIO interface may be configured for control signals or data signals. In some embodiments, the GPIO interface may be configured to connect the processor 410 to the camera 493, the display 494, the wireless communication module 460, the audio module 470, the sensor module 480, and the like. The GPIO interface may alternatively be configured as an I2C interface, an I2S interface, a UART interface, a MIPI interface, or the like.

The USB interface 430 is an interface that conforms to a USB standard specification, and may be specifically a mini USB interface, a micro USB interface, a USB type-C interface, or the like. The USB interface 430 may be configured to connect to a charger to charge the terminal device 400, or may be configured to transmit data between the terminal device 400 and a peripheral device, or may be configured to connect to a headset for playing audio through the headset. Alternatively, the interface may be configured to connect to another terminal device, for example, an AR device.

It should be understood that an interface connection relationship between the modules shown in embodiments of this application is merely an example for description, and constitutes no limitation on the structure of the terminal device 400. In some other embodiments of this application, the terminal device 400 may alternatively use an interface connection manner different from that in the foregoing embodiment, or use a combination of a plurality of interface connection manners.

The charging management module 440 is configured to receive a charging input from the charger. The charger may be a wireless charger or a wired charger. In some embodiments of wired charging, the charging management module 440 may receive a charging input from a wired charger through the USB interface 430. In some embodiments of wireless charging, the charging management module 440 may receive a wireless charging input through a wireless charging coil of the terminal device 400. The charging management module 440 supplies power to the terminal device through the power management module 441 while charging the battery 442.

The power management module 441 is configured to connect the battery 442, the charging management module 440, and the processor 410. The power management module 441 receives an input of the battery 442 and/or the charging management module 440, and supplies power to the processor 410, the internal memory 421, an external memory, the display 494, the camera 493, the wireless communication module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same device.

A wireless communication function of the terminal device 400 may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the terminal device 400 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 450 may provide a solution that is applied to the terminal device 400 and that includes wireless communication technologies such as 2G, 3G, 4G, and 5G. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering or amplification on the received electromagnetic wave, and transmit a processed electromagnetic wave to the modem processor for demodulation. The mobile communication module 450 may further amplify a signal modulated by the modem processor, and convert an amplified signal into an electromagnetic wave for radiation through the antenna 1. In some embodiments, at least some function modules of the mobile communication module 450 may be disposed in the processor 410. In some embodiments, at least some functional modules of the mobile communication module 450 may be disposed in a same device as at least some modules of the processor 410.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and is then transferred to the application processor. The application processor outputs a sound signal through an audio device (which is not limited to the speaker 470A, the receiver 470B, or the like), or displays an image or a video through the display 494. In some embodiments, the modem processor may be an independent device. In some other embodiments, the modem processor may be independent of the processor 410, and is disposed in a same device as the mobile communication module 450 or another function module.

The wireless communication module 460 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 400. The wireless communication module 460 may be one or more components integrating at least one communication processor module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert the signal into an electromagnetic wave for radiation through the antenna 2.

In some embodiments, in the terminal device 400, the antenna 1 and the mobile communication module 450 are coupled, and the antenna 2 and the wireless communication module 460 are coupled, so that the terminal device 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 400 implements a display function through the GPU, the display 494, the application processor, and the like. The GPU is a microprocessor for image processing, and is connected to the display 494 and the application processor. The GPU is configured to:

perform mathematical and geometric computation, and render an image. The processor 410 may include one or more GPUs, which execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 400 may include one or N displays 494, where N is a positive integer greater than 1.

The terminal device 400 may implement a photographing function through the ISP, the camera 493, the video codec, the GPU, the display 494, the application processor, and the like.

The ISP is configured to process data fed back by the camera 493. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scene. In some embodiments, the ISP may be disposed in the camera 493.

The camera 493 is configured to capture a static image or a video. An optical image of an object is generated by using the lens, and is projected to a light-sensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the terminal device 400 may include one or N cameras 493, where N is a positive integer greater than 1.

The digital signal processor is configured to process a digital signal, and may process another digital signal in addition to the digital image signal. For example, when the terminal device 400 selects a frequency, the digital signal processor is configured to perform Fourier transform on frequency energy, or the like.

The video codec is configured to compress or decompress a digital video. The terminal device 400 may support one or more video codecs. Therefore, the terminal device 400 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the terminal device 400 may be implemented through the NPU, for example, image recognition, facial recognition, voice recognition, and text understanding.

The external memory interface 420 may be configured to connect to an external storage card, for example, a micro SD card, to extend a storage capability of the terminal device 400. The external storage card communicates with the processor 410 through the external memory interface 420, to implement a data storage function. For example, files such as music and videos are stored in the external storage card.

The internal memory 421 may be configured to store computer-executable program code, and the executable program code includes instructions. The processor 410 runs the instructions stored in the internal memory 421 to perform various function applications of the terminal device 400 and process data. The internal memory 421 may include a program storage area and a data storage area. The program storage area may store an operating system, an application required by at least one function (for example, a sound playing function or an image playing function), and the like. The data storage area may store data (for example, audio data and an address book) and the like created during use of the terminal device 400. In addition, the internal memory 421 may include a high-speed random access memory, and may further include a nonvolatile memory, for example, at least one magnetic disk storage device, a flash memory device, or a universal flash storage (universal flash storage, UFS).

The terminal device 400 may implement an audio function by using the audio module 470, the speaker 470A, the receiver 470B, the microphone 470C, the headset jack 470D, the application processor, and the like, for example, music playing and sound recording.

The audio module 470 is configured to convert digital audio information into an analog audio signal for output, and is also configured to convert an analog audio input into a digital audio signal. The audio module 470 may be further configured to encode and decode an audio signal. In some embodiments, the audio module 470 may be disposed in the processor 410, or some function modules in the audio module 470 are disposed in the processor 410.

The speaker 470A, also referred to as a "loudspeaker", is configured to convert an audio electrical signal into a sound signal. The terminal device 400 may be configured to listen to music or answer a call in a hands-free mode through the speaker 470A.

The receiver 470B, also referred to as an "earpiece", is configured to convert an audio electrical signal into a sound signal. When a call is answered or voice information is received by using the terminal device 400, the receiver 470B may be put close to a human ear to receive a voice.

The microphone 470C, also referred to as a "mike" or a "mic", is configured to convert a sound signal into an electrical signal. When making a call or sending voice information, the user may make a sound near the microphone 470C through the mouth of the user, to input a sound signal to the microphone 470C. At least one microphone 470C may be disposed in the terminal device 400. In some other embodiments, two microphones 470C may be disposed in the terminal device 400, to collect a sound signal and implement a noise reduction function. In some other embodiments, three, four, or more microphones 470C may alternatively be disposed in the terminal device 400, to collect a sound signal and reduce noise. The microphones may further identify a sound source, to implement a directional recording function, and the like.

The headset jack 470D is configured to connect to a wired headset. The headset jack 470D may be the USB interface 430, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 480A is configured to sense a pressure signal, and may convert the pressure signal into an electrical signal. In some embodiments, the pressure sensor 480A may be disposed on the display 494. There are many types of pressure sensors 480A, such as a resistive pressure sensor, an inductive pressure sensor, and a capacitive pressure sensor. The capacitive pressure sensor may include at least two parallel plates made of conductive materials. When a force is applied to the pressure sensor 480A, capacitance between electrodes changes. The terminal device 400 determines pressure intensity based on a capacitance change. When a touch operation is performed on the display 494, the terminal device 400 detects a strength of the touch operation based on the pressure sensor 480A. The terminal device 400 may also calculate a touch position based on a detection signal of the pressure sensor 480A. In some embodiments, touch operations that are performed in a same touch position but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 480B may be configured to determine a motion posture of the terminal device 400. In some embodiments, an angular velocity of the terminal device 400 around three axes (namely, axes x, y, and z) may be determined by using the gyroscope sensor 480B. The gyroscope sensor 480B may be configured to implement image stabilization during photographing. For example, when the shutter is pressed, the gyroscope sensor 480B detects an angle at which the terminal device 400 jitters, calculates, based on the angle, a distance for which a lens module needs to compensate, and allows the lens to cancel the jitter of the terminal device 400 through reverse motion, to implement image stabilization. The gyroscope sensor 480B may also be used in a navigation scenario and a somatic game scenario.

The barometric pressure sensor 480C is configured to measure barometric pressure. In some embodiments, the terminal device 400 calculates an altitude based on a barometric pressure value measured by the barometric pressure sensor 480C, to assist in positioning and navigation.

The magnetic sensor 480D includes a Hall effect sensor. The terminal device 400 may detect opening and closing of a clamshell leather case by using the magnetic sensor 480D. In some embodiments, when the terminal device 400 is a clamshell phone, the terminal device 400 may detect opening and closing of a flip cover based on the magnetic sensor 480D. Further, a feature such as automatic unlocking upon opening of the flip cover is set based on a detected opening or closing state of the flip cover.

The acceleration sensor 480E may detect accelerations in various directions (usually on three axes) of the terminal device 400. When the terminal device 400 is still, a magnitude and a direction of gravity may be detected. The acceleration sensor may be further configured to identify a posture of the terminal device, and is applied to an application such as switching between a landscape mode and a portrait mode or a pedometer.

The distance sensor 480F is configured to measure a distance. The terminal device 400 may measure the distance in an infrared manner or a laser manner. In some embodiments, in a shooting scenario, the terminal device 400 may measure a distance by using the distance sensor 480F to implement quick focusing.

The optical proximity sensor 480G may include, for example, a light-emitting diode (LED) and a light detector like a photodiode. The light-emitting diode may be an infrared light-emitting diode. The terminal device 400 emits infrared light through the light-emitting diode. The terminal device 400 detects infrared reflected light from a surrounding object by using the photodiode.

When sufficient reflected light is detected, it may be determined that there is an object around the terminal device 400. When insufficient reflected light is detected, the terminal device 400 may determine that there is no object around the terminal device 400. The terminal device 400 may detect, by using the optical proximity sensor 480G, that the user holds the terminal device 400 close to an ear for a call, to automatically turn off a screen for power saving. The optical proximity sensor 480G may also be used in a smart cover mode or a pocket mode to automatically perform screen unlocking or locking.

The ambient light sensor 480L is configured to sense ambient light brightness. The terminal device 400 may adaptively adjust brightness of the display 494 based on the sensed ambient light brightness. The ambient light sensor 480L may also be configured to automatically adjust a white balance during photographing. The ambient light sensor 480L may also cooperate with the optical proximity sensor 480G to detect whether the terminal device 400 is in a pocket, to avoid an accidental touch.

The fingerprint sensor 480H is configured to capture a fingerprint. The terminal device 400 may use a feature of the collected fingerprint to implement fingerprint-based unlocking, application lock access, fingerprint-based photographing, fingerprint-based call answering, and the like.

The temperature sensor 480J is configured to detect a temperature. In some embodiments, the terminal device 400 executes a temperature processing policy based on the temperature detected by the temperature sensor 480J. For example, when the temperature reported by the temperature sensor 480J exceeds a threshold, the terminal device 400 lowers performance of a processor located near the temperature sensor 480J, to reduce power consumption to implement thermal protection. In some other embodiments, when the temperature is lower than another threshold, the terminal device 400 heats the battery 442 to prevent the terminal device 400 from being shut down abnormally due to a low temperature. In some other embodiments, when the temperature is lower than still another threshold, the terminal device 400 boosts an output voltage of the battery 442 to avoid abnormal shutdown caused by a low temperature.

The touch sensor 480K is also referred to as a "touch panel". The touch sensor 480K may be disposed on the display 494. The touch sensor 480K and the display 494 form a touchscreen, which is also referred to as a "touch screen". The touch sensor 480K is configured to detect a touch operation performed on or near the touch sensor. The touch sensor may transfer the detected touch operation to the application processor to determine a type of the touch event. A visual output related to the touch operation may be provided on the display 494. In some other embodiments, the touch sensor 480K may alternatively be disposed on a surface of the terminal device 400 in a position different from that of the display 494.

The bone conduction sensor 480M may obtain a vibration signal. In some embodiments, the bone conduction sensor 480M may obtain a vibration signal of a vibration bone of a human vocal part. The bone conduction sensor 480M may also be in contact with a human pulse, and receive a blood pressure beating signal. In some embodiments, the bone conduction sensor 480M may alternatively be disposed in the headset, to obtain a bone conduction headset. The audio module 470 may obtain a voice signal through parsing based on the vibration signal that is of the vibration bone of the vocal-cord part and that is obtained by the bone conduction sensor 480M, to implement a voice function. The application processor may parse heart rate information based on the blood pressure beating signal obtained by the bone conduction sensor 480M, to implement a heart rate detection function.

The button 490 includes a power-on button, a volume button, and the like. The button 490 may be a mechanical button, or may be a touch-sensitive button. The terminal device 400 may receive a button input, and generate a button signal input related to user setting and function control of the terminal device 400.

The motor 491 may generate a vibration prompt. The motor 491 may be configured to provide an incoming call vibration prompt and a touch vibration feedback. For example, touch operations performed on different applications (for example, photographing and audio playing) may correspond to different vibration feedback effects. The motor 491 may also correspond to different vibration feedback effects for touch operations performed on different areas of the display 494. Different application scenarios (for example, a time reminder, information receiving, an alarm clock, and a game) may also correspond to different vibration feedback effects. The touch vibration feedback effect may be further customized.

The indicator 492 may be an indicator light, and may be configured to indicate a charging status and a power change, or may be configured to indicate a message, a missed call, a notification, and the like.

The SIM card interface 495 is configured to connect to a SIM card. The SIM card may be inserted into the SIM card interface 495 or removed from the SIM card interface 495, to implement contact with or separation from the terminal device 400. The terminal device 400 may support one or N SIM card interfaces, where N is a positive integer greater than 1. The SIM card interface 495 may support a nano-SIM card, a micro-SIM card, a SIM card, and the like. A plurality of cards may be simultaneously inserted into a same SIM card interface 495. The plurality of cards may be of a same type or of different types. The SIM card interface 495 may also be compatible with different types of SIM cards. The SIM card interface 495 may also be compatible with an external storage card. The terminal device 400 interacts with a network through the SIM card, to implement functions such as calling and data communication. In some embodiments, an eSIM, namely, an embedded SIM card, is used for the terminal device 400. The eSIM card may be embedded into the terminal device 400, and cannot be separated from the terminal device 400.

A layered architecture, an event-driven architecture, a microkernel architecture, a microservice architecture, or a cloud architecture may be used for a software system of the terminal device 400. In this embodiment of this application, an Android system with a layered architecture is used as an example to illustrate a software structure of the terminal device 400.

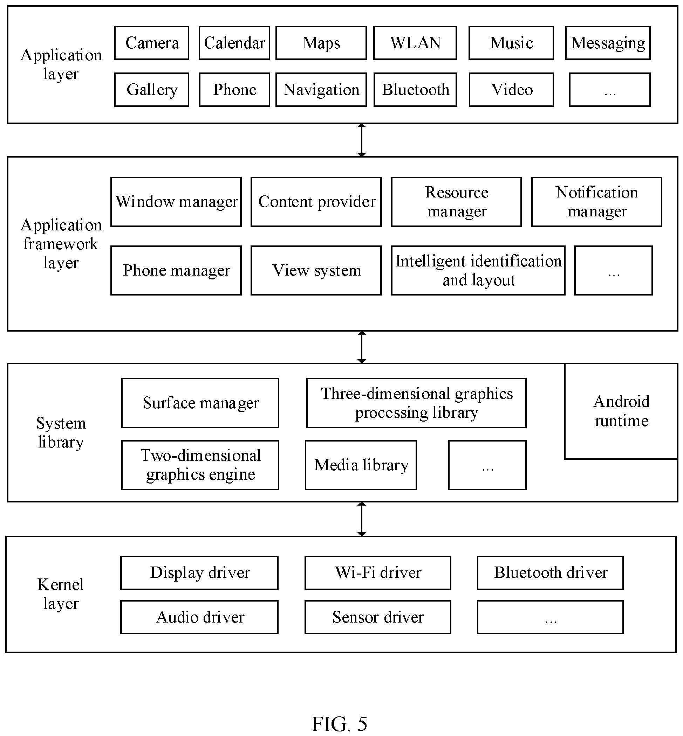

FIG. 5 is an example block diagram of the software structure of the terminal device 400 according to an embodiment of this application.

In the layered architecture of the terminal device 400, software is divided into several layers, and each layer has a clear role and task. The layers communicate with each other through a software interface. In some embodiments, the Android system is divided into four layers from top to bottom: an application layer, an application framework layer, an Android runtime (Android runtime) and a system library, and a kernel layer.

The application layer may include a series of application packages.

As shown in FIG. 5, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 5, the application framework layer may include a window manager, a phone manager, a content provider, a view system, a resource manager, a notification manager, an intelligent identification and layout, and the like.

The window manager is configured to manage a window program. The window manager may obtain a size of a display, determine whether there is a status bar, lock a screen, take a screenshot, and the like.

The phone manager is configured to provide a communication function for the terminal device 400, for example, management of a call status (including answering, declining, or the like).

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the terminal device vibrates, or an indicator light blinks.

The intelligent identification and layout provides an intelligent identification-based layout capability to resolve two problems at the application framework layer: One is to make an interface layout still available when an application developed on one end is installed on another device that does not adapt to the layout. The second is to implement the intelligent identification and layout of the application interface on a plurality of devices with zero modification to an application or application unawareness. The intelligent identification and layout may include two types of processing: screen resizing, and application layout identification and stretching.

The Android runtime includes a kernel library and a virtual machine. The Android runtime is responsible for scheduling and management of the Android system.

The kernel library includes two parts: a function that needs to be invoked by a Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a two-dimensional graphics engine (for example, SGL), a three-dimensional graphics processing library (for example, OpenGL ES), and a media library (Media Library).

The surface manager is configured to: manage a display subsystem, and provide fusion of 2D and 3D layers for a plurality of applications.

The 2D graphics engine is a drawing engine for 2D drawing.

The three-dimensional graphics processing library is configured to implement three-dimensional graphics drawing, image rendering, composition, layer processing, and the like.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The kernel layer is a layer between hardware and software. The kernel layer includes at least a display driver, an audio driver, a Wi-Fi driver, a sensor driver, and a Bluetooth driver.

It should be understood that components included in the software structure shown in FIG. 5 do not constitute a specific limitation on the terminal device 400. In some other embodiments of this application, the terminal device 400 may include more or fewer components than those shown in the figure, or some components may be combined, or some components may be split, or different component arrangements may be used.

Before the solutions in embodiments of this application are described, related technologies in embodiments of this application are first described.

1. Layout of an application interface

The application interface includes a plurality of view groups. The plurality of view groups have a nesting relationship, and may be represented in a tree structure. A size of a root view group of a layout represents a maximum size occupied by the layout. In the tree structure, a view group represented by any non-leaf node may include at least one of a sub-view group and a view, where a quantity of sub-view groups and a quantity of views are not limited, and may be one or more. The view may be a control, an image, or the like.

The layout shown in FIG. 1 is used as an example. The layout includes a view group 1 and a view group 2. The view group 1 is a root view group, the view group 2 is a sub-view group of the view group 1, and the view group 1 may be referred to as a parent view group of the view group 1. In addition to the view group 2, the view group 1 further includes three views (controls) located at the top and four views (controls) located at the bottom, for example, a view 11. The view group 2 includes a plurality of views, for example, a view 21.

Positions of the views may be represented by using horizontal and vertical coordinates. For example, two horizontal coordinates respectively represent a left start position and a right end position of a control, and two vertical coordinates respectively represent a top start position and a bottom end position of the control.

In a possible implementation, a horizontal axis and a vertical axis that are used to represent a view may use an upper left corner of a view group to which the view belongs as an origin, a rightward origin direction as a positive direction of the horizontal axis, and a downward origin direction as a positive direction of the vertical axis. For example, a horizontal axis and a vertical axis that are used to represent the view 11 use an upper left corner of the view group 1 as an origin, and a horizontal axis and a vertical axis that are used to represent the view 21 use an upper left corner of the view group 2 as an origin. The upper left corner of the view group 2 may be represented by coordinates relative to the upper left corner of the view group 1.

In a possible implementation, a horizontal axis and a vertical axis that are used to represent a view may use an upper left corner of the root view group as an origin, a rightward origin direction as a positive direction of the horizontal axis, and a downward origin direction as a positive direction of the vertical axis. For example, horizontal axes and vertical axes that are used to represent the view 11 and the view 21 all use an upper left corner of the view group 1 as an origin.

It should be noted that the foregoing describes two manners of representing a view position as examples. However, in embodiments of this application, the view position may alternatively be represented in another manner. This is not specifically limited. In addition,

It should be noted that an application usually has more than one interface. FIG. 1 shows only an example of an application interface. The application and the interface of the application are not specifically limited in embodiments of this application.

2. Screen columnization

Screen sizes of terminal devices may be various. For example, a screen size of a mobile phone is 6.6 inches (2770×1228), a screen size of a foldable mobile phone is 8 inches (2480x2200), and a screen size of a tablet is 10.95 inches (2560x1600).

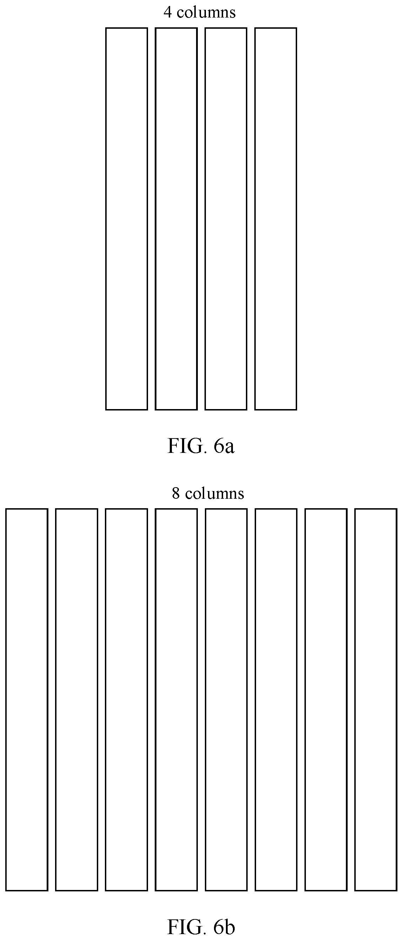

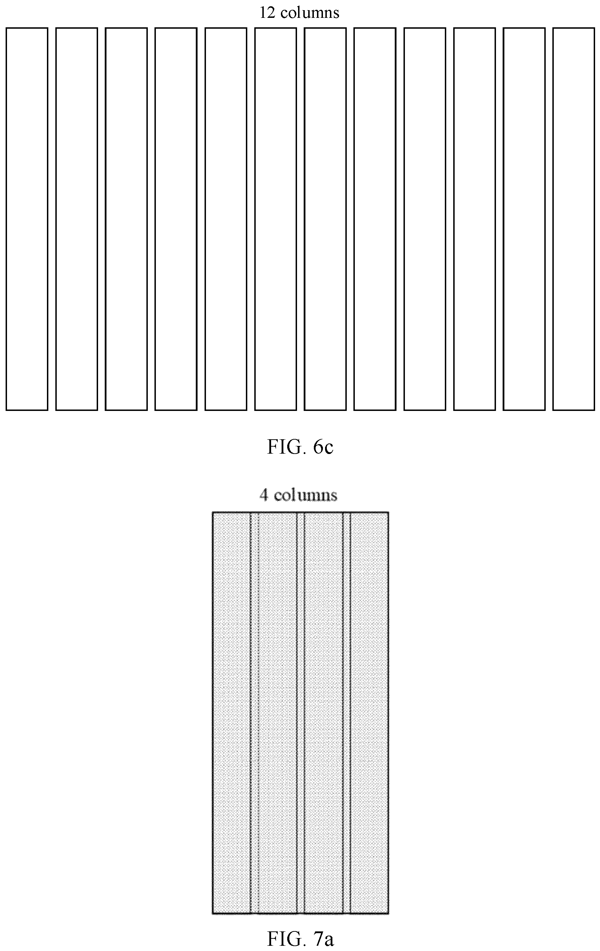

In this embodiment of this application, the screens of the terminal devices may be columnized. In other words, the screens of the terminal devices are divided into different quantities of equal columns. For example, FIG. 6a to FIG. 6c are diagrams of screen division of the terminal devices. As shown in FIG. 6a, a screen of the mobile phone may be divided into 4 columns. As shown in FIG. 6b, a screen of the foldable mobile phone may be divided into 8 columns. As shown in FIG. 6c, a screen of the tablet may be divided into 12 columns.

It should be noted that the foregoing describes examples in which the screen of the terminal device is divided into columns. However, the screen of the terminal device may alternatively be divided into another quantity of columns based on a width and a height of each grid in the columns. This is not specifically limited in embodiments of this application.

3. Column representation of the layout of the application interface

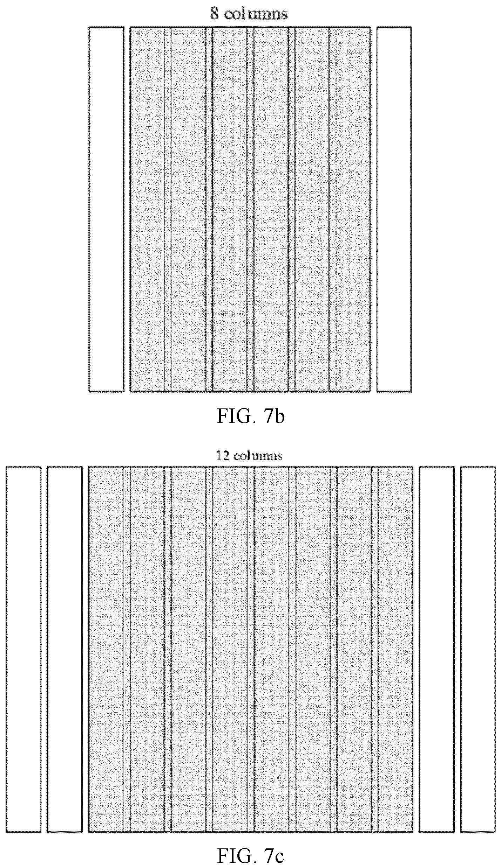

Based on the foregoing content, the size of the root view group of the layout of the application interface may also be represented in a column manner. For example, FIG. 7a to FIG. 7c are diagrams of column representation of the root view group. As shown in FIG. 7a, the root view group of the layout of the application interface occupies all four columns on the mobile phone. In this scenario, the root view group occupies an entire screen of the mobile phone, which is equivalent to that the application interface is arranged on the entire screen of the mobile phone. As shown in FIG. 7b, the root view group of the layout of the application interface occupies six middle columns on the foldable mobile phone. In this scenario, a height of the root view group fully occupies a height of the foldable mobile phone, but a width of the root view group does not fully occupy a width of the foldable mobile phone, and there is a margin of one column on each of the left and right sides, which is equivalent to that the application interface is arranged in a horizontal middle position of the foldable mobile phone. As shown in FIG. 7c, the root view group of the layout of the application interface occupies eight middle columns on the tablet. In this scenario, a height of the root view group fully occupies a height of the tablet, but a width of the root view group does not fully occupy a width of the tablet, and there is a margin of two columns on each of the left and right sides, which is equivalent to that the application interface is arranged in a horizontal middle position of the tablet.

It should be noted that the foregoing describes examples of columns occupied by the root view group of the layout of the application interface on the screen of the terminal device. However, a quantity of columns occupied by the root view group may be adaptively adjusted. This is not specifically limited in embodiments of this application.

It should be noted that, in embodiments of this application, the size may be considered as a width and/or a height, or may be considered as an aspect ratio. This is not specifically limited. In addition, the size may be represented in a plurality of manners. For example, the quantity of columns is used to represent the width, a height of the column is used to represent the height, and the aspect ratio is represented in a ratio manner. This is not specifically limited either.

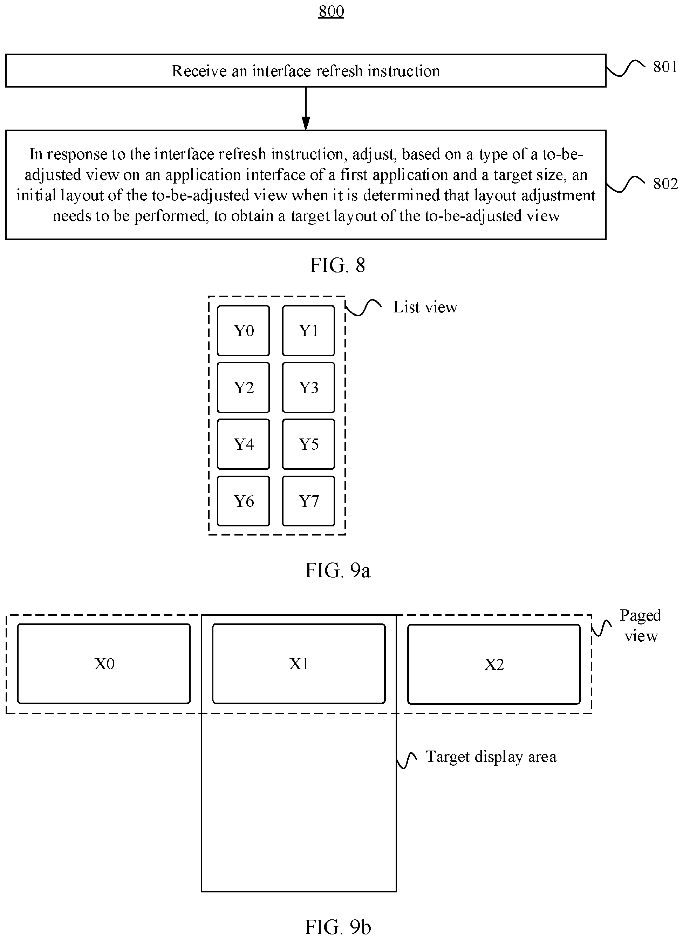

FIG. 8 is a flowchart of a process 800 of an interface layout method according to an embodiment of this application. The process 800 may be performed by the terminal device 400 shown in FIG. 4, and in particular, by a layout module in the terminal device 400. The layout module may be disposed at an application framework layer of an operating system (for example, an Android system or HarmonyOS) of the terminal device, or the layout module may be implemented by using a system application of the terminal device. This is not specifically limited in embodiments of this application. The process 800 is described as a series of steps or operations. It should be understood that the steps or the operations of the process 800 may be performed in various sequences and/or simultaneously, and are not limited to an execution sequence shown in FIG. 8. A view included on an application interface of a first application (the first application may be any application, but the first application is different from the system application for implementing the layout module, and the first application is not specifically limited in embodiments of this application) on the terminal device is used as an example. The process 800 may include the following steps.

Step 801: Receive an interface refresh instruction.

In embodiments of this application, the layout apparatus may receive the interface refresh instruction from the first application.

In the first application, an operation of opening the first application may trigger the interface refresh instruction, or an operation that causes a width change of a target display area may trigger the interface refresh instruction. The operation that causes the width change of the target display area may include changing a direction of the terminal device (for example, changing from a portrait mode to a landscape mode, or from a landscape mode to a portrait mode), and may further include changing a state of a foldable mobile phone (for example, completely unfolding the foldable mobile phone from a folded state, or folding the foldable mobile phone from an unfolded state).

Step 802: In response to the interface refresh instruction, adjust, based on a type of a to-be-adjusted view on the application interface of the first application and a target size, an initial layout of the to-be-adjusted view when it is determined that layout adjustment is to be performed, to obtain a target layout of the to-be-adjusted view.

The target display area is used to display an adjusted layout of the application interface of the first application, and the adjusted layout includes the target layout of the to-be-adjusted view.

In a possible implementation, in response to the interface refresh instruction, the layout module may first obtain an initial size and the target size, where the initial size corresponds to the initial layout, and the target size corresponds to the target layout; and when the initial size is the same as the target size, determine not to perform the layout adjustment; or when the initial size is different from the target size, determine that the layout adjustment is to be performed.

The initial size may be a size that is of a display area and that is assumed by an application developer based on a size of a most commonly used mobile phone when the first application is developed. For example, it may be assumed, based on a width of the commonly used mobile phone, that the size (initial size) of the display area is four columns, and then the initial layout of the application interface of the first application is designed based on the four columns. The initial layout is an initial layout that is set by the application developer when the first application is developed. Generally, the application developer may design the layout of the application interface based on an aspect ratio of a commonly used terminal. For example, a screen size of the mobile phone is four columns. Therefore, a size of a root view group in the initial layout of the first application interface may be four columns, and a sub-view group and/or a view are/is arranged in the root view group. It should be understood that, the mobile phone is a most commonly used terminal device. To facilitate adaptation to more terminal devices, the application developer may usually use the screen size of the mobile phone as the size of the root view group in the initial layout. However, this is not limited. The size of the root view group in the initial layout may alternatively be based on a screen size of another terminal device, or may be a commonly used screen size of most terminal devices. This is not specifically limited in embodiments of this application.

The target size is a size of the target display area, and the target display area is an actual display area of the application interface of the first application. When the application interface of the first application is displayed in a full-screen manner, the target display area may be an entire screen of the terminal device. When the application interface of the first application is displayed in a split-screen manner, the target display area may be a part of the screen of the terminal device (for example, an upper half screen of the terminal device). When the application interface of the first application is displayed by using a pop-up window or a card, the target display area may be an area in which the window or the card is displayed on the terminal device. In addition, there may be another scenario for the target display area. This is not specifically limited in embodiments of this application. For example, in a scenario in which the first application is displayed in the full-screen manner, a size of a target display area (target size) of the mobile phone is 4 columns, a size of a target display area (target size) of the foldable mobile phone is 8 columns, and a size of a target display area (target size) of a tablet is 12 columns.

The layout module may first determine whether the layout adjustment is to be performed. To be specific, when the initial size is the same as the target size, it indicates that, from development to actual application of the first application, the size of the display area remains unchanged. Therefore, the initial layout provided by the first application may be directly used for display on the terminal device, and the layout of the application interface of the first application does not need to be adjusted. When the initial size is different from the target size, it indicates that, from development to actual application of the first application, the size of the display area has changed. Therefore, the layout of the application interface of the first application needs to be adjusted to adapt to the target display area on the terminal device.

In embodiments of this application, the to-be-adjusted view may be a list view, a paged view, or a text view, and a plurality of layouts may be set for the to-be-adjusted view based on the size of the target display area of the terminal device.

FIG. 9a is an example diagram of the list view in the initial layout. As shown in FIG. 9a, the list view may usually be used to present a product, a video, an image, or the like on the application interface. The list view may be recorded in a data set, and the data set includes information about a plurality of views (Y0 to Y7), for example, a quantity of columns (two columns are used as an example in FIG. 9a) in which the plurality of views in the list view are arranged, and positions, a sequence, indexes, and corresponding content/functions of the plurality of views. It should be noted that the data set may further include other information about the list view. This is not specifically limited. The list view includes but is not limited to RecycleView, ListView, and subclasses thereof.

FIG. 9b is an example diagram of the paged view in the initial layout. As shown in FIG. 9b, the paged view may usually be used to present a slidable page at the top of the application interface, and generally, three or four views (three views X0 to X2 are used as an example in FIG. 9b) are set. A finger of a user slides leftward or rightward in the paged view, and may change a view displayed in the target display area. Other views are not displayed in the target display area, but are still available in the background. For example, a page switch component may be used for a plurality of views, and a middle view (for example, X1) is displayed in the target display area by default. The paged view includes but is not limited to ViewPager and subclasses thereof.

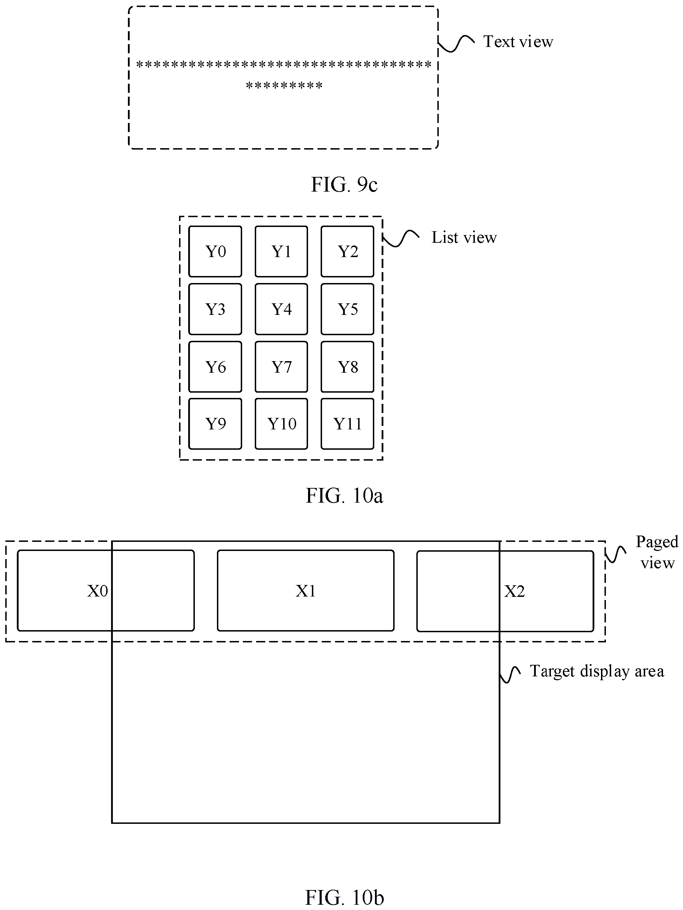

FIG. 9c is an example diagram of the text view in the initial layout. As shown in FIG. 9c, the text view may usually be used to present word descriptions on the application interface. For example, in addition to a product image, a product attribute is described in words. The text view includes but is not limited to TextView and subclasses thereof.

It should be noted that FIG. 9a to FIG. 9c show three view groups as examples. However, the three view groups may alternatively be presented in another manner and may use a plurality of specific implementation technologies. This is not specifically limited in embodiments of this application.

In embodiments of this application, when it is determined that the layout adjustment is to be performed, the following two methods may be used to implement the layout adjustment.

In a first method, the layout module may directly adjust the initial layout of the to-be-adjusted view based on the target size to obtain the target layout of the to-be-adjusted view.

In a second method, the layout module may first obtain a preset intermediate size, and adjust the initial layout of the to-be-adjusted view based on the intermediate size to obtain an intermediate layout; and then adjust the intermediate layout based on the target size to obtain the target layout of the to-be-adjusted view. In other words, the layout module may add an intermediate adjustment process to a process from the initial layout to the target layout.

The intermediate size is a preset size, and the size of the target display area may be obtained through analysis based on historical experience or big data. When the layout of the application interface is the intermediate size, the application interface is most aesthetic and most meets visual and operation requirements of the user. The foldable mobile phone is used as an example. The screen size of the foldable mobile phone is eight columns, and an intermediate size during full-screen display may be set to six columns.

In embodiments of this application, there are two cases: In one case, if the intermediate size is the same as the initial size or the intermediate size is the same as the target size, the first method may be used; and in the other case, if the intermediate size is different from the initial size and the target size, the second method may be used.

In the second method, the layout module may perform, based on the intermediate size, at least one of stretching, compression, and position adjustment on a plurality of view groups included in the initial layout to obtain the intermediate layout. The adjustment may include stretching/compressing the size of the root view group in the initial layout to the intermediate size, and stretching/compressing (including proportionally stretching/compressing, stretching/compressing in a fixed proportion, and the like) the plurality of view groups in the initial layout within a range of the intermediate size, or adjusting a view position. A view including an image is used as an example. To avoid distortion of the image, a proportion of the view cannot be arbitrarily adjusted. Therefore, the view may be set to an appropriate position by position adjustment (including moving up, down, left, right, or the like), so that the entire layout is more harmonious.

Optionally, in embodiments of this application, adjustment from the initial layout to the intermediate layout may alternatively be implemented by the application. To be specific, the layout module notifies the application of the intermediate size, and the application implements the foregoing process on the initial layout based on the intermediate size, to obtain the intermediate layout. Then, the layout module obtains information about the intermediate layout from the application.

It should be noted that, in addition to the foregoing methods, another method may be further used to adjust the initial layout. A manner of adjusting the initial layout to the intermediate layout is not specifically limited in embodiments of this application.

Both the two methods include adjusting a layout before adjustment based on the target size to obtain the target layout of the to-be-adjusted view. The layout before adjustment refers to the initial layout of the to-be-adjusted view in the first method, and refers to the intermediate layout in the second method.

In embodiments of this application, different adjustment manners may be used for different types of to-be-adjusted views.

1. When the to-be-adjusted view is the list view, a quantity of columns in which a plurality of sub-views included in the list view are arranged in the initial layout is obtained; a target quantity of columns is obtained based on the quantity of columns in which the plurality of sub-views are arranged, the initial size, and the target size; and the plurality of sub-views are arranged based on the target quantity of columns to obtain a target layout of the list view.

As shown in FIG. 9a, the list view includes eight sub-views (Y0 to Y7), which are arranged in two columns in the initial layout, and each column has four sub-views.

The target quantity of columns may be obtained based on the quantity of columns in which the plurality of sub-views are arranged, the initial size, and the target size. For example, the target quantity of columns is obtained according to the following formula:

$$C2 = C1 \times \frac{W2}{W1}$$

Herein, C2 represents the target quantity of columns, C1 represents the quantity of columns in which the plurality of sub-views are arranged, W1 represents the initial size, and W2 represents the target size. For the initial size and the target size, refer to the foregoing descriptions. Details are not described herein again.

It should be noted that, in embodiments of this application, the target quantity of columns may alternatively be obtained by using another method. This is not specifically limited.

For example, the target quantity of columns in the foldable mobile phone that is obtained through calculation according to the foregoing formula is 3. Therefore, three columns may be used for arrangement in the target display area, and each column has four sub-views. FIG. 10a is an example diagram of the list view in the target layout. As shown in FIG. 10a, three columns are used for arrangement in the target layout, and each column has four sub-views. It can be learned that, compared with the initial layout shown in FIG. 9a, the target layout enables more sub-views to be displayed in the target display area.

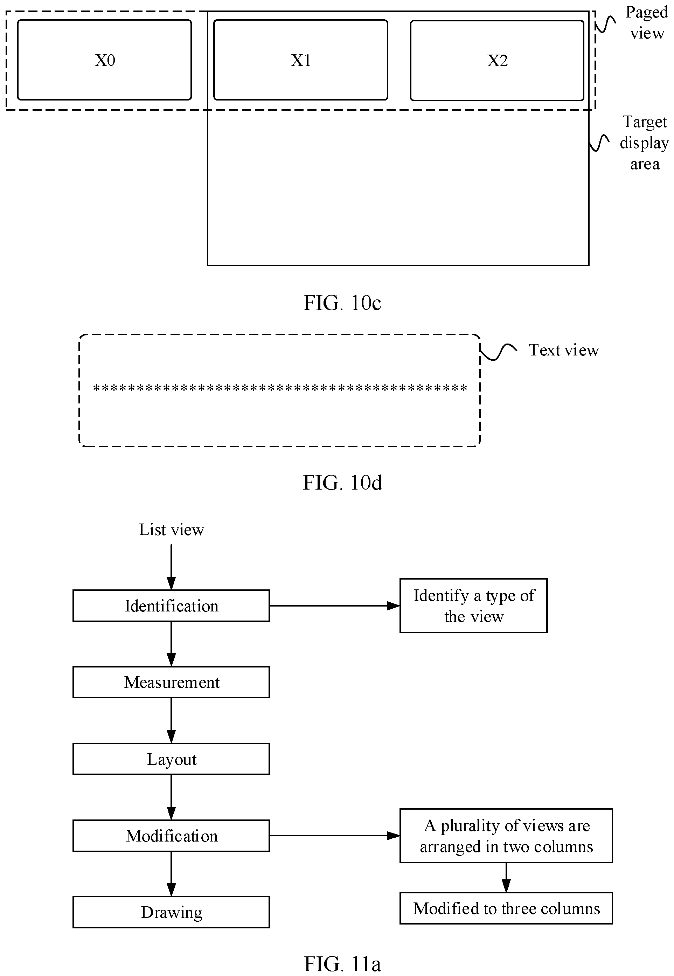

FIG. 11a is a flowchart of adjusting the list view. As shown in FIG. 11a, instrumentation is first performed before measurement (Measure), and a type of a view group is identified as a list view. The view group includes, for example, a view of RecycleView, and a type of the view is marked. Then, after the layout (Layout), a quantity of columns in which a plurality of included views are arranged is obtained for the list view based on a mark in the identification step. For example, SpanCount of LayoutManager of RecycleView is the quantity of columns of the list view in RecycleView, and a modified target quantity of columns is calculated based on a screen size of the terminal device, where the modified target quantity of columns is obtained by extending the original quantity of columns by 1.5 times. Therefore, the target quantity of columns is 3. Finally, after the list view in RecycleView is modified to three columns, corresponding content can be displayed in the new columns during drawing.

2. When the to-be-adjusted view is the paged view, sizes of a plurality of sub-views included in the paged view and an arrangement sequence of the plurality of sub-views in the initial layout are obtained; target padding content is obtained based on the sizes of the plurality of sub-views, the arrangement sequence of the plurality of sub-views, the initial size, and the target size, where the target padding content includes a plurality of padding sub-views and display sizes of the plurality of padding sub-views, and the initial size corresponds to the initial layout; and the plurality of padding sub-views are padded in the target display area based on the display sizes of the plurality of padding sub-views to obtain a target layout of the paged view. Optionally, the layout module may further adjust (including extension or compression), based on the target size, the sizes of the plurality of sub-views included in the paged view. This is not specifically limited.

As shown in FIG. 9b, the paged view includes three sub-views (X0 to X2), a sub-view X1 is displayed in the target display area, and neither the sub-view X nor the sub-view X2 is displayed.

When the target display area is expanded, a size of a view included in the paged view may be expanded, and more view content may be displayed in the target display area. For example, the left and right sides each are expanded by a 1/4 screen size based on a width of the initial layout, but the 1/4 screen size is blank, and no view is padded. Therefore, a tailoring attribute of the sub-view X1 may be set to false, so that some content of the sub-views X0 and X2 may be padded in expanded blank positions on the left and right sides. In embodiments of this application, content within a specific width range that needs to be clip for a sub-view to be padded may be obtained based on a size of the sub-view, the initial size, and the target size, to obtain the target padding content.

For example, the following method may be used to adjust the paged view:

```
int padding = (int) (width / coef);
setPadding(padding, 0, padding, 0);
setClipToPadding(false).
```

It can be learned that, a difference between the adjustment of the paged view and the adjustment of the list view is that the adjustment of the paged view is a modification of content in the view, but not a change of the quantity of columns. FIG. 10b and FIG. 10c are example diagrams of the paged view in the target layout. As shown in FIG. 10b, in the target display area, in addition to the sub-view X1 in the middle position, some content of the sub-views X0 and X2 is further added. As shown in FIG. 10c, in the target display area, in addition to the sub-view X1 in the middle position, all content of the sub-view X2 is further added. It can be learned that, compared with the initial layout shown in FIG. 9b, the target layout enables more view content to be displayed in the target display area.

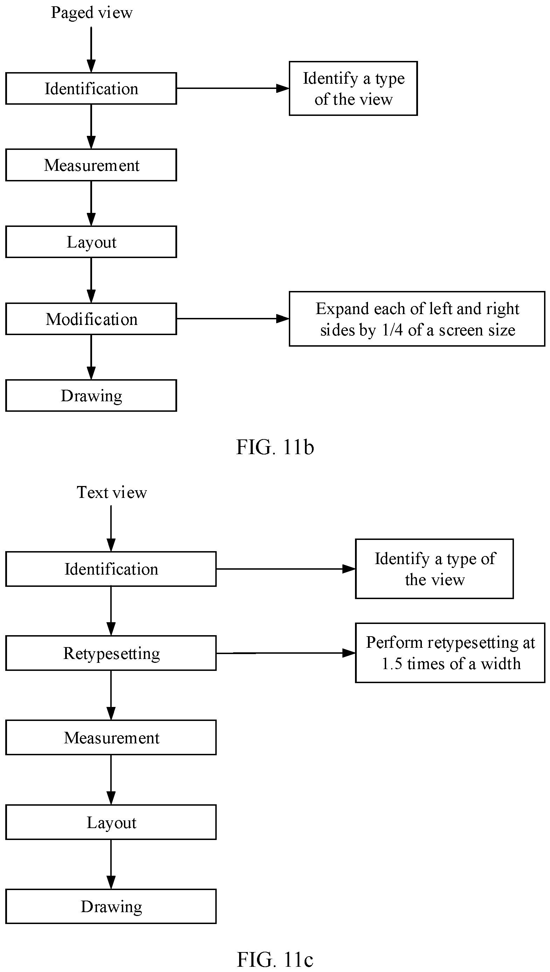

FIG. 11b is a flowchart of adjusting the paged view. As shown in FIG. 11b, instrumentation is first performed before measurement (Measure), and a type of a view group is identified as a paged view. The view group includes, for example, a view of ViewPager, and a type of the view is marked. Then, after the layout (Layout), left and right padding (Padding) values are calculated for the paged view based on a mark in the identification step. For example, to leave a margin of 1/2 of each of left and right cards, the left and right sides of the paged view each are expanded to 1/4 of a screen width during a modification, and ClipToPadding (ClipToPadding) on the left and right sides is set to false. Finally, an effect of half of a previous page and half of a next page can be displayed during drawing.

3. When the to-be-adjusted view is the text view, a width of a word area included in the text view in the initial layout is obtained; a target width is obtained based on the width of the word area, the initial size, and the target size; and the width of the word area is adjusted to the target width to obtain a target layout of the text view.

As shown in FIG. 9c, a word area including two lines of words is displayed in the text view.

FIG. 10d is an example diagram of the text view in the target layout. As shown in FIG. 10d, after a width of a target word area is determined, the word area may be retypeset, and an arrangement of the word area is adjusted within a range of the width of the target word area, to obtain a word area including one line of words. It can be learned that, compared with the initial layout shown in FIG. 9c, the target layout enables more texts to be displayed in the target display area.

FIG. 11c is a flowchart of adjusting the text view. As shown in FIG. 11c, instrumentation is first performed before retypesetting, and a type of a view is identified as a text view. The view includes, for example, a view of TextView, and a type of the view group is marked. Then, during retypesetting, if current content is a multi-line text, measurement and typesetting are re-performed based on 1.5 times of a current width. Optionally, a quantity of lines of the text may be first obtained, and whether the text is a multi-line text is determined. If the text is a multi-line text, retypesetting is required. Finally, during drawing, an effect obtained through typesetting based on 1.5 times of the current width may be displayed, so that more content can be displayed.

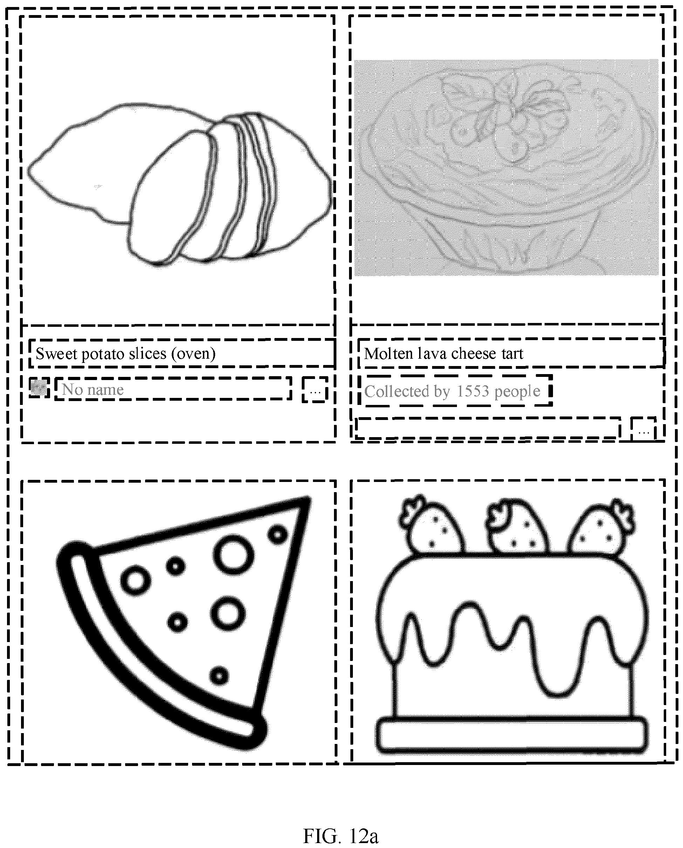

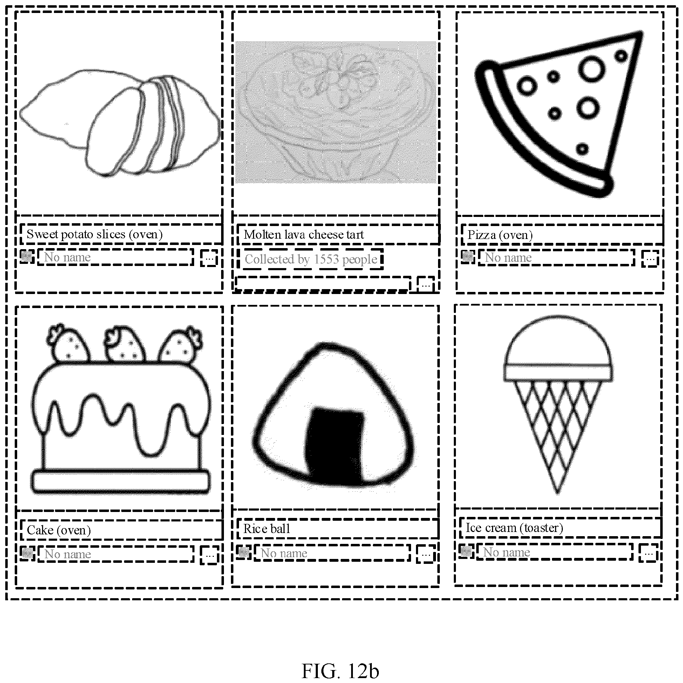

FIG. 12a and FIG. 12b are diagrams of a list view before and after adjustment respectively. As shown in FIG. 12a, in an initial layout (in a screen size of a mobile phone), a plurality of views included in the list view are arranged in two columns, and there are four views in total. As shown in FIG. 12b, after the adjustment, in a second layout (in a screen size of a foldable mobile phone), a plurality of list views included in the list view are arranged in three columns, and there are six views in total.

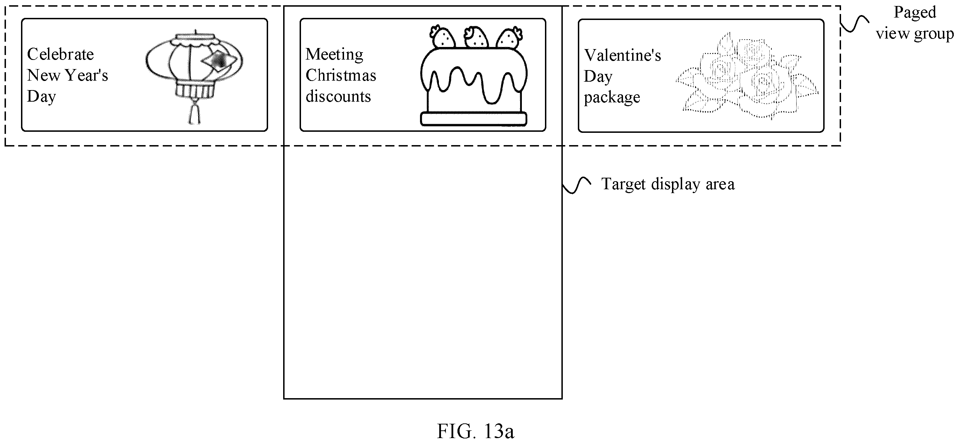

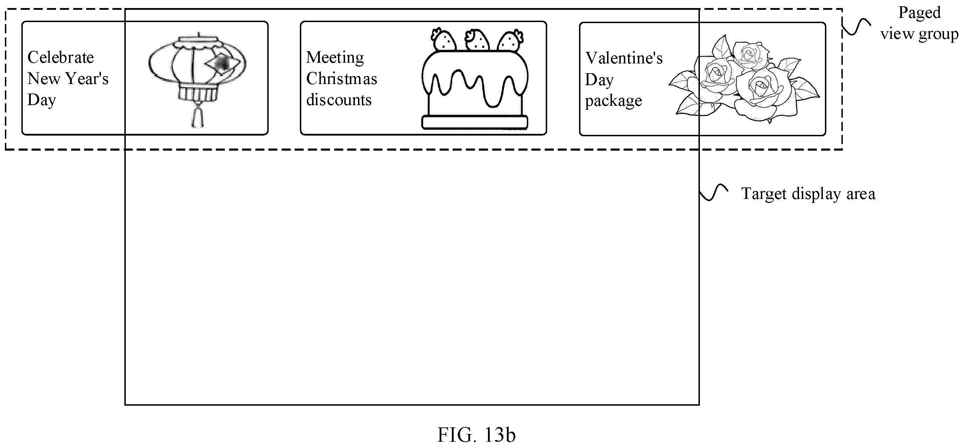

FIG. 13a and FIG. 13b are diagrams of a paged view before and after adjustment respectively. As shown in FIG. 13a, in an initial layout (in a screen size of a mobile phone), the paged view includes three views, but one view X1 is displayed in a target display area. As shown in FIG. 13b, after the adjustment, in a target layout (in a screen size of a foldable mobile phone), the paged view includes three views, but in addition to the displayed view X1, the target display area further includes content of a part of each of two views X0 and X2 that are on the left and right sides of the view X1.

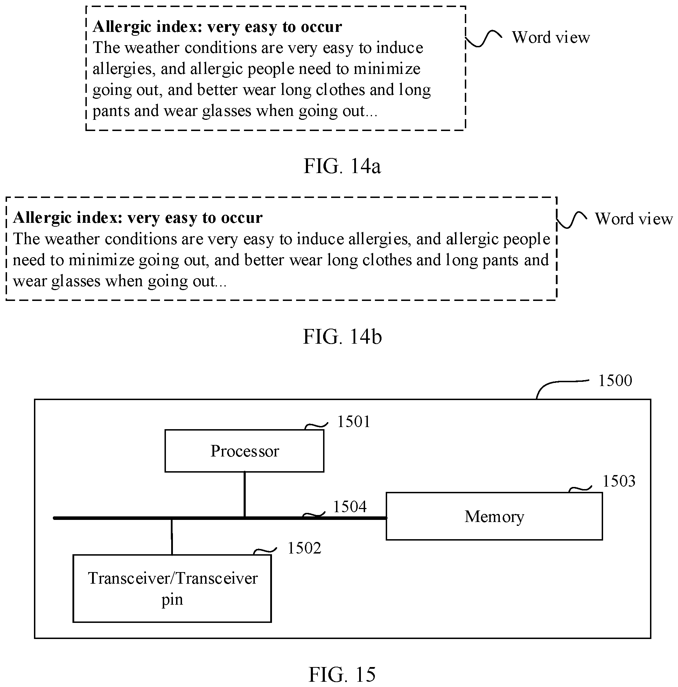

FIG. 14a and FIG. 14b are diagrams of a text view before and after adjustment respectively. As shown in FIG. 14a, in an initial layout (in a screen size of a mobile phone), the text view includes a word area with three lines of words. As shown in FIG. 14b, after the adjustment, in a target layout (in a screen size of a foldable mobile phone), the text view includes a word area with two lines of words.

In embodiments of this application, the layout module adjusts the layout of the to-be-adjusted view on the application interface of the first application, to adapt to the size of the target display area, so that application development costs can be reduced, and more diversified application interfaces can be applied to. In addition, different adjustment manners are used based on a type of a view during adjustment, so that more view content can be arranged in the target layout.

It may be understood that, to implement the foregoing functions, the terminal device includes corresponding hardware and/or software modules for performing the functions. With reference to algorithm steps of each example described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In an example, FIG. 15 is a block diagram of an apparatus 1500 according to an embodiment of this application. As shown in FIG. 15, the apparatus 1500 may include a processor 1501 and a transceiver/transceiver pin 1502, and optionally, further include a memory 1503.

Components of the apparatus 1500 are coupled together through a bus 1504. In addition to a data bus, the bus 1504 further includes a power bus, a control bus, and a status signal bus. However, for clear description, various types of buses in the figure are referred to as the bus 1504.

Optionally, the memory 1503 may be configured to store instructions in the foregoing method embodiments. The processor 1501 may be configured to: execute the instructions in the memory 1503, control a receive pin to receive a signal, and control a transmit pin to send a signal.

The apparatus 1500 may be the terminal device or the chip of the terminal device in the foregoing method embodiments.

All related content of the steps in the method embodiments may be cited in function descriptions of corresponding function modules. Details are not described herein again.

An embodiment further provides a computer storage medium. The computer storage medium stores computer instructions. When the computer instructions are run on a terminal device, the terminal device is enabled to perform the related method steps, to implement the interface layout method in the foregoing embodiments.

An embodiment further provides a computer program product. The computer program product includes computer program code. When the computer program code is run on a computer, the computer is enabled to perform the foregoing related steps, to implement the interface layout method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the interface layout method in the foregoing method embodiments.

The terminal device, the computer storage medium, the computer program product, and the chip provided in embodiments each are configured to perform the corresponding method provided above. Therefore, for beneficial effects that can be achieved by the terminal device, the computer storage medium, the computer program product, and the chip, refer to the beneficial effects in the corresponding method provided above. Details are not described herein again.

The foregoing descriptions about implementations allow a person skilled in the art to understand that, for convenient and brief description, division of the foregoing function modules is taken as an example for illustration. In actual application, the foregoing functions can be allocated to different modules and implemented based on a requirement, that is, an inner structure of an apparatus is divided into different function modules to implement all or some of the functions described above.

In the several embodiments provided in this application, it should be understood that the disclosed apparatus and method may be implemented in another manner. For example, the described apparatus embodiments are merely examples. For example, division into modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

Any content of embodiments of this application and any content of a same embodiment may be freely combined. Any combination of the foregoing content shall fall within the scope of embodiments of this application.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, embodiments of this application are not limited to the foregoing specific implementations. The foregoing specific implementations are merely examples instead of limiting. A person of ordinary skill in the art, under the teachings of embodiments of this application, may further make many modifications without departing from the purpose of embodiments of this application and the protection scope of the claims, and all of the modifications fall within the protection of embodiments of this application.

**Claims**

1. An interface layout method, applied to a layout module of a terminal device, wherein the terminal device further comprises a first application, and the method comprises:

   receiving an interface refresh instruction; and
   in response to the interface refresh instruction, adjusting, based on a type of a to-be-adjusted view on an application interface of the first application and a target size, an initial layout of the to-be-adjusted view when it is determined that layout adjustment is to be performed, to obtain a target layout of the to-be-adjusted view, wherein the target size is a size of a target display area, the target display area is used to display an adjusted layout of the application interface of the first application, and the adjusted layout comprises the target layout of the to-be-adjusted view.

2. The method according to claim 1, wherein the layout module is disposed at an application framework layer of an operating system of the terminal device.

3. The method according to claim 1 or 2, wherein before the adjusting, based on a type of a to-be-adjusted view on an application interface of the first application and a target size, an initial layout of the to-be-adjusted view when it is determined that layout adjustment is to be performed, to obtain a target layout of the to-be-adjusted view, the method further comprises:

   obtaining an initial size and the target size, wherein the initial size corresponds to the initial layout; and
   when the initial size is the same as the target size, determining not to perform the layout adjustment; or
   when the initial size is different from the target size, determining that the layout adjustment is to be performed.

4. The method according to any one of claims 1 to 3, wherein the to-be-adjusted view is a list view, a paged view, or a text view.

5. The method according to claim 4, wherein the adjusting, based on a type of a to-be-adjusted view on an application interface of the first application and a target size, an initial layout of the to-be-adjusted view, to obtain a target layout of the to-be-adjusted view comprises:

   when the to-be-adjusted view is the list view, obtaining a quantity of columns in which a plurality of sub-views comprised in the list view are arranged in the initial layout;
   obtaining a target quantity of columns based on the quantity of columns in which the plurality of sub-views are arranged, the initial size, and the target size, wherein the initial size corresponds to the initial layout; and
   arranging the plurality of sub-views based on the target quantity of columns to obtain a target layout of the list view.

6. The method according to claim 4, wherein the adjusting, based on a type of a to-be-adjusted view on an application interface of the first application and a target size, an initial layout of the to-be-adjusted view, to obtain a target layout of the to-be-adjusted view comprises:

   when the to-be-adjusted view is the paged view, obtaining sizes of a plurality of sub-views comprised in the paged view and an arrangement sequence of the plurality of sub-views in the initial layout;
   obtaining target padding content based on the sizes of the plurality of sub-views, the arrangement sequence of the plurality of sub-views, the initial size, and the target size, wherein the target padding content comprises a plurality of padding sub-views and display sizes of the plurality of padding sub-views, and the initial size corresponds to the initial layout; and
   padding, in the target display area, the plurality of padding sub-views based on the display sizes of the plurality of padding sub-views to obtain a target layout of the paged view.

7. The method according to claim 4, wherein the adjusting, based on a type of a to-be-adjusted view on an application interface of the first application and a target size, an initial layout of the to-be-adjusted view, to obtain a target layout of the to-be-adjusted view comprises:

   when the to-be-adjusted view is the text view, obtaining a width of a word area comprised in the text view in the initial layout;
   obtaining a target width based on the width of the word area, the initial size, and the target size, wherein the initial size corresponds to the initial layout; and
adjusting the width of the word area to the target width to obtain a target layout of the text view.

8. The method according to claim 5, wherein when the target size is greater than the initial size, the target quantity of columns is greater than the quantity of columns in which the plurality of sub-views are arranged.

9. The method according to claim 6, wherein when the target size is greater than the initial size, a first quantity of views displayed in the target display area is greater than a second quantity of views, the first quantity of views corresponds to the target layout, and the second quantity of views corresponds to the initial layout.

10. The method according to claim 7, wherein when the target size is greater than the initial size, a first quantity of words displayed in a row in the target display area is greater than a second quantity of words, the first quantity of words corresponds to the target layout, and the second quantity of words corresponds to the initial layout.

11. The method according to any one of claims 1 to 10, wherein before the adjusting, based on a type of a to-be-adjusted view on an application interface of the first application and a target size, an initial layout of the to-be-adjusted view when it is determined that layout adjustment is to be performed, to obtain a target layout of the to-be-adjusted view, the method further comprises:
identifying a type of the to-be-adjusted view.

12. The method according to claim 5 or 8, wherein the obtaining a target quantity of columns based on the quantity of columns in which the plurality of sub-views are arranged, the initial size, and the target size comprises:

obtaining the target quantity of columns according to the following formula:

$$C2 = C1 \times \frac{W2}{W1},$$

wherein
C2 represents the target quantity of columns, C1 represents the quantity of columns in which the plurality of sub-views are arranged, W1 represents a width of the initial size, and W2 represents a width of the target size.

13. An interface layout apparatus, used in a terminal device, wherein the terminal device further comprises a first application, and the apparatus comprises:

a layout module, configured to: receive an interface refresh instruction; and in response to the interface refresh instruction, adjust, based on a type of a to-be-adjusted view on an application interface of the first application and a target size, an initial layout of the to-be-adjusted view when it is determined that layout adjustment is to be performed, to obtain a target layout of the to-be-adjusted view, wherein the target size is a size of a target display area; and
a display module, configured to display, in the target display area, an adjusted layout of the application interface of the first application, wherein the adjusted layout comprises the target layout of the to-be-adjusted view.

14. The apparatus according to claim 13, wherein the layout module is disposed at an application framework layer of an operating system of the terminal device.

15. The apparatus according to claim 13 or 14, wherein the layout module is further configured to: obtain an initial size and the target size, wherein the initial size corresponds to the initial layout; and when the initial size is the same as the target size, determine not to perform the layout adjustment; or when the initial size is different from the target size, determine that the layout adjustment is to be performed.

16. The apparatus according to any one of claims 13 to 15, wherein the to-be-adjusted view is a list view, a paged view, or a text view.

17. The apparatus according to claim 16, wherein the layout module is specifically configured to: when the to-be-adjusted view is the list view, obtain a quantity of columns in which a plurality of sub-views comprised in the list view are arranged in the initial layout; obtain a target quantity of columns based on the quantity of columns in which the plurality of sub-views are arranged, the initial size, and the target size, wherein the initial size corresponds to the initial layout; and arrange the plurality of sub-views based on the target quantity of columns to obtain a target layout of the list view.

18. The apparatus according to claim 16, wherein the layout module is specifically configured to: when the to-be-adjusted view is the paged view, obtain sizes of a plurality of sub-views comprised in the paged view and an arrangement sequence of the plurality of sub-views in the initial layout; obtain target padding content based on the sizes of the plurality of sub-views, the arrangement sequence of the plurality of sub-views, the initial size, and the target size, wherein the target padding content comprises a plurality of padding sub-views and display sizes of the plurality of padding sub-views, and the initial size corresponds to the initial layout; and pad, in the target display area, the plurality of padding sub-views based on the display sizes of the plurality of padding sub-views to obtain a target layout of the paged view.

19. The apparatus according to claim 16, wherein the layout module is specifically configured to: when the to-be-adjusted view is the text view, obtain a width of a word area comprised in the text view in the initial layout; obtain a target width based on the width of the word area, the initial size, and the target size, wherein the initial size corresponds to the initial layout; and adjust the width of the word area to the target width to obtain a target layout of the text view.

20. The apparatus according to claim 17, wherein when the target size is greater than the initial size, the target quantity of columns is greater than the quantity of columns in which the plurality of sub-views are arranged.

21. The apparatus according to claim 18, wherein when the target size is greater than the initial size, a first quantity of views displayed in the target display area is greater than a second quantity of views, the first quantity of views corresponds to the target layout, and the second quantity of views corresponds to the initial layout.

22. The apparatus according to claim 19, wherein when the target size is greater than the initial size, a first quantity of words displayed in a row in the target display area is greater than a second quantity of words, the first quantity of words corresponds to the target layout, and the second quantity of words corresponds to the initial layout.

23. The apparatus according to any one of claims 13 to 22, wherein the layout module is further configured to identify a type of the to-be-adjusted view.

24. The apparatus according to claim 16 or 17, wherein the layout module is specifically configured to obtain the target quantity of columns according to the following formula:

$$C2 = C1 \times \frac{W2}{W1},$$

wherein
C2 represents the target quantity of columns, C1 represents the quantity of columns in which the plurality of sub-views are arranged, W1 represents a width of the initial size, and W2 represents a width of the target size.

25. A terminal device, comprising:

one or more processors; and
a memory, configured to store one or more programs, wherein
when the one or more programs are executed by the one or more processors, the one or more processors are enabled to implement the method according to any one of claims 1 to 12.

26. A computer-readable storage medium, comprising a computer program, wherein when the computer program is executed on a computer, the computer is enabled to perform the method according to any one of claims 1 to 12.

27. A computer program product, wherein the computer program product comprises computer program code, and when the computer program code is run on a computer, the computer is enabled to perform the method according to any one of claims 1 to 12.

FIG. 1

FIG. 2

FIG. 3

Terminal device 400

FIG. 4

| Application layer | Camera | Calendar | Maps | WLAN | Music | Messaging |
| | Gallery | Phone | Navigation | Bluetooth | Video | ... |

| Application framework layer | Window manager | Content provider | Resource manager | Notification manager |
| | Phone manager | View system | Intelligent identification and layout | ... |

| System library | Surface manager | Three-dimensional graphics processing library | Android runtime |
| | Two-dimensional graphics engine | Media library | ... | |

| Kernel layer | Display driver | Wi-Fi driver | Bluetooth driver |
| | Audio driver | Sensor driver | ... |

FIG. 5

4 columns

FIG. 6a

8 columns

FIG. 6b

12 columns

FIG. 6c

4 columns

FIG. 7a

8 columns

FIG. 7b

12 columns

FIG. 7c

800

| Receive an interface refresh instruction | 801 |

In response to the interface refresh instruction, adjust, based on a type of a to-be-adjusted view on an application interface of a first application and a target size, an initial layout of the to-be-adjusted view when it is determined that layout adjustment needs to be performed, to obtain a target layout of the to-be-adjusted view | 802 |

FIG. 8

List view

| Y0 | Y1 |
| Y2 | Y3 |
| Y4 | Y5 |
| Y6 | Y7 |

FIG. 9a

Paged view

| X0 | X1 | X2 |

Target display area

FIG. 9b

*********************************
*********

Text view

FIG. 9c

| | | |
|---|---|---|
| Y0 | Y1 | Y2 |
| Y3 | Y4 | Y5 |
| Y6 | Y7 | Y8 |
| Y9 | Y10 | Y11 |

List view

FIG. 10a

X0    X1    X2

Paged view

Target display area

FIG. 10b

**EP 4 495 764 A1**

X0

X1

X2

Paged view

Target display area

FIG. 10c

*********************************************

Text view

FIG. 10d

List view

Identification → Identify a type of the view

Measurement

Layout

Modification → A plurality of views are arranged in two columns → Modified to three columns

Drawing

FIG. 11a

33

Paged view

↓

Identification ————————→ Identify a type
                              of the view

↓

Measurement

↓

Layout

↓

Modification ————————→ Expand each of left and right
                              sides by 1/4 of a screen size

↓

Drawing

FIG. 11b

Text view

↓

Identification ————————→ Identify a type of
                              the view

↓

Retypesetting ————————→ Perform retypesetting at
                              1.5 times of a width

↓

Measurement

↓

Layout

↓

Drawing

FIG. 11c

Sweet potato slices (oven)

No name

Molten lava cheese tart

Collected by 1553 people

FIG. 12a

Sweet potato slices (oven)

No name

Molten lava cheese tart

Collected by 1553 people

Pizza (oven)

No name

Cake (oven)

No name

Rice ball

No name

Ice cream (toaster)

No name

FIG. 12b

Celebrate
New Year's
Day

Meeting
Christmas
discounts

Valentine's
Day
package

Paged
view group

Target display area

FIG. 13a

EP 4 495 764 A1

Paged view group

Target display area

Celebrate New Year's Day

Meeting Christmas discounts

Valentine's Day package

FIG. 13b

**Allergic index: very easy to occur**
The weather conditions are very easy to induce allergies, and allergic people need to minimize going out, and better wear long clothes and long pants and wear glasses when going out...

Word view

FIG. 14a

**Allergic index: very easy to occur**
The weather conditions are very easy to induce allergies, and allergic people need to minimize going out, and better wear long clothes and long pants and wear glasses when going out...

Word view

FIG. 14b

1500

Processor 1501

1504

Memory 1503

Transceiver/Transceiver pin 1502

FIG. 15

## INTERNATIONAL SEARCH REPORT

| International application No. |
| --- |
| **PCT/CN2023/087036** |

| A. | CLASSIFICATION OF SUBJECT MATTER |
| --- | --- |
| | G06F9/451(2018.01)i |

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; VEN; TWABS; CNTXT; USTXT; WOTXT; EPTXT; ENTXT; CNKI; IEEE, 百度, BAIDU: 界面, 布局, 调整, 屏幕, 横屏, 切换, 视图, 控件, 类型, interface, layout, adjust, screen, landscape screen, switch, view, controller, type

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 113687743 A (GUANGDONG OPPO MOBILE COMMUNICATIONS CO., LTD.) 23 November 2021 (2021-11-23)<br>description, paragraphs 38-130 | 1-27 |
| Y | CN 110597510 A (HUAWEI TECHNOLOGIES CO., LTD.) 20 December 2019 (2019-12-20)<br>description, paragraphs 223-421 | 1-27 |
| Y | CN 103218195 A (GUANGDONG OPPO MOBILE TELECOMMUNICATIONS CO., LTD.) 24 July 2013 (2013-07-24)<br>description, paragraphs 35-71 | 1-27 |
| A | CN 109933400 A (NUBIA TECHNOLOGY CO., LTD.) 25 June 2019 (2019-06-25)<br>entire document | 1-27 |
| A | US 2017329499 A1 (SAP SE) 16 November 2017 (2017-11-16)<br>entire document | 1-27 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 June 2023** | **20 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 495 764 A1

## INTERNATIONAL SEARCH REPORT
### Information on patent family members

International application No.

**PCT/CN2023/087036**

| Patent document cited in search report | | | Publication date (day/month/year) | Patent family member(s) | | | Publication date (day/month/year) |
|---|---|---|---|---|---|---|---|
| CN | 113687743 | A | 23 November 2021 | WO | 2021232961 | A1 | 25 November 2021 |
| CN | 110597510 | A | 20 December 2019 | US | 2022269515 | A1 | 25 August 2022 |
| | | | | WO | 2021027661 | A1 | 18 February 2021 |
| | | | | EP | 3995948 | A1 | 11 May 2022 |
| | | | | CN | 110597510 | B | 20 August 2021 |
| | | | | CN | 114365080 | A | 15 April 2022 |
| CN | 103218195 | A | 24 July 2013 | CN | 103218195 | B | 16 March 2016 |
| CN | 109933400 | A | 25 June 2019 | None | | | |
| US | 2017329499 | A1 | 16 November 2017 | US | 10579238 | B2 | 03 March 2020 |

Form PCT/ISA/210 (patent family annex) (July 2022)

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210423664